# EUROPÄISCHE PATENTSCHRIFT

(11) **EP 1 945 590 B1**
(45) Veröffentlichungstag und Bekanntmachung des Hinweises auf die Patenterteilung: **23.10.2013**
(21) Anmeldenummer: 06791777.3
(22) Anmeldetag: 01.09.2006
(51) Int. Cl.: C04B 28/02, C04B 24/26, C04B 26/06

(54) **BAUSTOFFZUSAMMENSETZUNG, INSBESONDERE BITUMENFREIE ABDICHTUNGSMASSE**
BUILDING MATERIAL COMPOSITION, ESPECIALLY BITUMEN-FREE SEALANT
COMPOSITION DE MATERIAU DE CONSTRUCTION, NOTAMMENT MATERIAU D ETANCHEITE NE CONTENANT PAS DE BITUME

(30) Priorität: 07.11.2005 DE 102005053336
(43) Veröffentlichungstag der Anmeldung: 23.07.2008
(73) Patentinhaber: Henkel AG & Co. KGaA, 40589 Düsseldorf (DE)
(72) Erfinder: GRASSE, Manfred, 59423 Unna (DE); WINDHÖVEL, Udo, 40789 Monheim (DE); LEHMKUEHLER, Katharina, 58675 Hemer (DE); PFEFFERLE, Caroline, 59077 Hamm (DE)
(86) Internationale Anmeldenummer: PCT/EP2006/008545
(87) Internationale Veröffentlichungsnummer: WO 2007/054148

(56) Entgegenhaltungen:
- EP-A2- 0 146 098
- WO-A2-2006/037144
- DE-A1- 10 150 601
- DE-A1- 10 213 712
- DE-A1- 10 239 631
- DE-A1-102005 010 307
- DE-U1-202005 015 642
- FR-A1- 2 175 056

## Beschreibung

Die vorliegende Erfindung betrifft eine Baustoffzusammensetzung, insbesondere eine bitumenfreie Abdichtungsmasse (Dichtmasse), sowie deren Verwendung, insbesondere zu Zwecken der Bauwerksabdichtung, sowie ein entsprechendes Verfahren zum Schutz bzw. zur Abdichtung von Bauwerken oder Bauteilen unter Verwendung einer solchen Baustoffzusammensetzung.

Im Rahmen der Bauwerksabdichtung, insbesondere zum Abdichten und zum Schutz von erdberührten Bauwerken und Bauteilen, wie Kelleraußenwänden, feuchten Räumen, Stützmauern und dergleichen, aber auch zu Zwecken der Dachabdichtung, können grundsätzlich unterschiedliche Abdichtungssysteme zum Einsatz kommen, nämlich einerseits bitumenhaltige Massen und Bahnsysteme und andererseits zementäre Systeme bzw. mineralische Dichtungsschlämmen. Daneben existieren noch Abdichtungssysteme auf Basis von kunststoffmodifizierten Bitumendickbeschichtungen (KMB), welche sozusagen eine "Zwitterform" bilden und folglich eine gewisse Zwischenstellung einnehmen.

Die Anforderungen, welche die verschiedenen zuvor genannten Abdichtungssysteme im Hinblick auf die Bauwerksabdichtung erfüllen müssen, sind durch verschiedene Normen und Richtlinien festgelegt, so z. B. in der DIN 18195, "Bauwerksabdichtungen", Teil 1 bis 10 (Teil 1 bis 6: Ausgabe August 2000; Teil 7: Ausgabe Juni 1989; Teile 8 bis 10: Ausgabe März 2003), DIN 18195-100 (Entwurf, Juni 2003) und DIN 18195-101 (Entwurf, September 2005), in der Richtlinie für die Planung und Ausführung von Abdichtungen erdberührter Bauteile mit flexiblen Dichtungsschlämmen (1. Ausgabe, Stand: Januar 1999), in der Richtlinie für die Planung und Ausführung von Abdichtungen von Bauteilen mit mineralischen Dichtungsschlämmen (1. Ausgabe, Stand: Mai 2002) und in der Richtlinie für die Planung und Ausführung von Abdichtungen mit kunststoffmodifizierten Bitumendickbeschichtungen (KMB) (2. Ausgabe, Stand: November 2001).

Zementäre Systeme bzw. mineralische Dichtungsschlämmen besitzen zwar den Vorteil der Umweltfreundlichkeit, sind aber nur schlecht dickschichtig verarbeitbar bzw. auftragbar, so daß sie sich nicht zum dickschichtigen Auftrag an senkrechten Flächen, wie Wänden, eignen. Folglich kommen in der Bauwerksabdichtung, und zwar sowohl zur Abdichtung und zum Schutz von erdberührten Bauwerken und Bauteilen, wie Kelleraußenwänden, feuchten Räumen, Stützmauern und dergleichen, als auch bei der Dachabdichtung, derzeit vorrangig bitumenhaltige Abdichtungen, üblicherweise auf Basis von Bitumendickbeschichtungen und im Fall von Dachabdichtungen auch auf Basis von Bitumendachbahnen, zum Einsatz.

Die entsprechenden Bitumenformulierungen des Standes der Technik können dabei grundsätzlich in ein- oder zweikomponentiger Form zum Einsatz kommen. Einkomponentige Bitumendickbeschichtungen härten oder verfilmen rein physikalisch durch Verdunsten von Wasser bzw. Lösemitteln, während zweikomponentige Bitumendickbeschichtungen üblicherweise aus einer Basiskomponente auf Basis einer im allgemeinen ionischen Bitumenemulsion und einer Härterkomponente bestehen, wobei als Härterkomponente zumeist eine Mischung aus Füllstoffen, wie z. B. Quarzsand und Portlandzement und/oder Tonerdeschmelzzement, eingesetzt werden kann.

Der Einsatz von Bitumen ist zwar relativ kostengünstig, jedoch wird Bitumen bereits jetzt in Dampf- und Aerosolform als krebserzeugend für den Menschen eingestuft, so daß die Möglichkeit besteht, daß Bitumen künftig auch als solches als karzinogen eingestuft werden könnte, was dem Einsatz von Bitumen zu Zwecken der Bauwerksabdichtung dann entgegenstehen würde.

Daher hat es im Stand der Technik bereits zahlreiche Bestrebungen gegeben, Abdichtungssysteme bereitzustellen, welche zumindest im wesentlichen ohne Bitumen auskommen. Nachteil der meisten bitumenfreien Abdichtungsmassen des Standes der Technik ist, daß sie infolge des Einsatzes teurer Rohstoffe bzw. teurer Ausgangschemikalien insgesamt relativ kostenintensiv sind, was ihrer Anwendbarkeit im Baugewerbe oftmals entgegensteht. Die meisten Systeme weisen zudem einen sehr komplexen Chemismus auf, was in bezug auf eine praxisgerechte Handhabung gleichermaßen nachteilig ist. Eine Vielzahl von bitumenfreien Abdichtungssystemen des Standes der Technik greift zudem auf reaktive Systeme zurück, welche in der Praxis die Handhabung erschweren. Zudem erfüllen die meisten bitumenfreien Abdichtungsmassen nicht die Leistungsfähigkeit der herkömmlichen Bitumenabdichtungsmassen.

Eine Reihe von bitumenfreien Abdichtungsmassen des Standes der Technik basiert auf Epoxidharzsystemen. Epoxidharze sind aber nicht nur relativ kostenintensiv und zudem umweltschädigend, sondern auch bei der Verarbeitung der Abdichtungsmasse relativ komplex in der Handhabung.

So beschreibt die DE 101 50 601 A1 eine zweikomponentige Zusammensetzung zur Abdichtung von Bauwerken und Bauteilen auf Basis eines Epoxidharzes vom Bisphenol-A- oder Bisphenol-F-Typ und mit einem hiermit reaktiven Aminhärter in der anderen Komponente neben diversen anderen Bestandteilen, wie Füllstoffen, Polystyrolkugeln, zementhaltigen Bindemitteln, Additiven, Plastifizierungsmitteln, Polymerdispersionen und dergleichen. Aufgrund der Reaktivität des Systems muß es zwingend als zweikomponentige Zusammensetzung bereitgestellt werden, die erst unmittelbar vor der Anwendung in den entsprechenden Mengenverhältnissen zusammengemischt wird. Die Inkorporierung der Polystyrolkugeln in die Pulverkomponente hat zudem den Nachteil, daß beim Zusammenmischen der beiden Komponenten eine gewisse Tendenz zur Entmischung infolge der mangelnden Benetzung der Polystyrolkugeln auftritt.

Die DE 44 16 570 A1 betrifft eine elastische Form- und/oder Dichtungsmasse aus rezykliertem Altgummimaterial und/oder Weichplastikteilen zur Verwendung als Nutzschichten, Schutzflächen, Verbundkörpern oder dergleichen. Die elastische Form- und/oder Dichtungsmasse besteht aus 0,1 bis 0,8 Teilen Gummigranulat unterschiedlicher Körnung bis höchstens 2 mm Durchmesser, welches mit etwa 0,9 bis 0,2 Teilen wasserlöslicher Acrylatdispersion einschließlich Additiven gebunden ist. Die Form- und/oder Dichtungsmasse muß vor ihrer Anwendung unter dynamisch wechselndem Druck bis 10 bar in kleinen Volumeneinheiten sequentiell verdichtet werden, was in bezug auf eine praxisnahe Anwendung abträglich ist.

Die DE 694 19 983 T2 bzw. die entsprechende EP 0 632 170 B1 beschreibt ein vorgefertigtes mehrstufiges Gebilde zur Verwendung im Bereich des Hochbaus zum Abdichten von Eindeckungen und von Dachabdeckungen mit einer Blendschicht auf Bitumenbasis, in die eine Aussteifung eingebettet ist, und mit einer äußeren Schicht, wobei die äußere Schicht aus einem Material besteht, mit dem eine Formgebung möglich ist und das die Formstabilität des Endproduktes erhöht. Ferner kann das Gebilde eine zusätzliche Harzschicht aus Elastomeren und Copolymeren in einer Wasseremulsion aufweisen, die zwischen der Blendschicht und der vorformenden Schicht liegt. Nachteilig bei diesem Produkt ist insbesondere die zwingende Verwendung von Bitumen. Zudem kommt das Gebilde nur in vorgefertigter Form zum Einsatz, so daß eine Abdichtung unebener Flächen nicht immer gewährleistet ist.

Die EP 0 556 414 A1 betrifft eine dauerelastische Zweikomponenten-Mehrzweckmasse, welche ein reaktives System auf Basis von Bisphenol und/oder einer anionischen Bitumenemulsion mit entsprechenden Härtern umfaßt. Es handelt sich hierbei um ein reaktives epoxidharzbasiertes System, welches darüber hinaus kein hydraulisches Bindemittel, insbesondere keinen Zement, aufweist. Zudem ist das System nicht zwingend bitumenfrei ausgebildet.

Die US 4 634 725 A beschreibt eine rißbeständige Beschichtungsmasse für Bauwerksstrukturen zu Zwecken der Rißüberbrückung für Mauerwerk, welche eine Dispersion aus kugelförmigen Körnern in einer Harz/Härter-Lösung von definierter Viskosität enthält. Die kugelförmigen Körner mit einem Durchmesser von 1 bis 6 mm sind in der Harz/Härter-Lösung homogen dispergiert. Die Konsistenz erlaubt eine Anwendung an vertikalen Flächen ohne zu verlaufen, wobei Risse bis zu 5 mm Breite überbrückt werden sollen.

Die JP 53132054 A betrifft einen Leichtfüllstoff zur Betonsanierung, welcher geschäumte Polystyrolperlen, Glas und Härter enthält. Hierbei handelt es sich um ein reines Betonsanierungsprodukt. Als Erhärtungsrohstoff wird entweder ein organisches Bindemittel bzw. eine organische Dispersion oder aber alternativ eine Zementpaste eingesetzt.

Schließlich betrifft die DE-OS 26 43 501 einen Kitt aus Klebemitteln und Füllstoffen, welcher infolge der Inkorporierung eines Emulgiermittels wassermischbar ausgebildet ist. Als Klebemittel werden fließender Asphalt, Terpentin, Gummi und Polymethylmethacrylat genannt. Der Kitt kann z. B. als Fuganmasse, als Ersatz für Mörtel, als Versiegelung oder zur Ausfüllung zwischen zwei Materialien eingesetzt werden.

In DE 102 13 712 A1 wird ein Leichtbeton offenbart, der Epoxidharz, Vinylacetat und Steinmehl und gegebenenfalls mindestens einen der Leichtzuschläge Blähton, Blähglas, Blähschiefer, Polystyrolmehl oder Polyurethanmehl enthält. Neben geringer Dichte, hoher Festigkeit und geringer Wärmeleitfähigkeit weist dieser auch eine hohe Wasserdurchlässigkeit auf. Naturgemäß eignet sich ein solcher Leichtbeton daher nicht als Abdichtungsmasse.

Das der vorliegenden Erfindung zugrundeliegende Problem liegt somit in der Bereitstellung einer bitumenfreien Baustoffzusammensetzung, welche sich als Dichtmasse bzw. Abdichtungsmasse in der Bauwerksabdichtung eignet. Insbesondere soll eine derartige Baustoffzusammensetzung die zuvor geschilderten Nachteile des Standes der Technik zumindest weitgehend vermeiden oder aber zumindest abschwächen.

Die Anmelderin hat nun überraschenderweise herausgefunden, daß sich das zuvor geschilderte Problem dadurch lösen läßt, daß man eine Polymerdispersion zusammen mit einer Mischung von Leichtfüllstoffen auf Basis von Polystyrolpartikeln, keramischen Mikrohohlkugeln und synthetischen Mikrohohlkugeln sowie gegebenenfalls mit mindestens einem Bindemittel formuliert.

Gegenstand der vorliegenden Erfindung - gemäß einem ersten Aspekt der vorliegenden Erfindung - ist somit eine Baustoffzusammensetzung, insbesondere eine bitumenfreie Abdichtungsmasse, wobei die Baustoffzusammensetzung
- mindestens eine Polymerdispersion oder ein entsprechendes Redispersionspulver (insbesondere auf Basis vorzugsweise wäßrig redisporgierbarer Emulsionspolymere),
- Polystyrolpartikel,
- keramische Mikrohohlkugeln,
- synthetische Mikrohohlkugeln und
- gegebenenfalls mindestens ein Bindemittel
enthält.

Überraschenderweise führt eine Kombination der vorgenannten Inhaltsstoffe zu einer bitumenfreien Baustoffzusammensetzung, welche sich in hervorragender Weise für die Bauwerksabdichtung eignet und neben ausgezeichneten Abdichtungseigenschaften, wie sie nach dem Stand der Technik nur mit bitumenhaltigen Abdichtungsmassen erreicht werden können, insbesondere ein ausgezeichnetes Schrumpfverhalten nach ihrem Auftrag dahingehend aufweist, daß zumindest im wesentlichen keine Schrumpfung bei der Trocknung und Aushärtung beobachtet wird. Dies wird nachfolgend noch ausgeführt.

Ein wesentlicher Bestandteil der erfindungsgemäßen Baustoffzusammensetzung ist eine Polymerdispersion oder ein entsprechendes Redispersionspulver. Der Begriff der Polymerdispersion ist eine Sammelbezeichnung für Dispersionen (Latices) von feinverteilten, natürlichen und/oder synthetischen Polymeren üblicherweise in wäßrigen, seltener nichtwäßrigen Dispersionsmitteln; von diesem Begriff umfaßt sind damit Dispersionen von Polymeren, wie Naturkautschuk ("Kautschuklatex") und Synthesekautschuk ("Syntheselatex"), sowie von Kunstharzen ("Kunstharzdispersionen") und Kunststoffen ("Kunststoffdispersionen"), wie Polymerisaten, Polykondensaten und Polyadditionsverbindungen. Für weitere Einzelheiten zu dem Begriff der Polymerdispersionen kann beispielsweise verwiesen werden auf Römpp Chemielexikon, 10. Auflage, Band 5, 1998, Georg Thieme Verlag, Stuttgart/New York, Seiten 3469/3470, Stichwort: "Polymerdispersionen", sowie auf die dort referierte Literatur.

Erfindungsgemäß bevorzugt kommt eine Polymerdispersion zum Einsatz. Grundsätzlich kann aber anstelle der Polymerdispersion auch ein entsprechendes redispergierbares, insbesondere wasserdispergierbares Dispersionspulver auf Basis derselben Polymeren zum Einsatz kommen, aus dem sich dann die Polymerdispersion durch Anmachen mit dem entsprechenden Dispergiermedium, vorzugsweise Wasser, erhalten läßt. Aus Gründen der Einfachheit ist zwar nachfolgend meist nur von den Polymerdispersionen die Rede, jedoch gelten sämtliche nachfolgenden Ausführungen, insbesondere im Hinblick auf die Charakterisierung dieser Polymerdispersionen (z. B. physikalische und chemische Eigenschaften, Parameter, Struktur, Zusammensetzung etc.), selbstverständlich auch entsprechend für die jeweils korrespondierenden Redispersionspulver, auch wenn dies nicht explizit erwähnt ist. Derartige Redispersionspulver sind dem Fachmann als solche bekannt und zudem kommerziell erhältlich (z. B. von den Firmen Wacker, Celanese, Rhodia, Elotex, Dow Chemical, BASF, Vinavil, Unimex etc.), so daß hier nicht auf weitere Einzelheiten zur Technologie der Redispersionspulver eingegangen zu werden braucht. Als Redispersionspulver werden erfindungsgemäß insbesondere solche auf Basis vorzugsweise wäßrig redispergierbarer Emulsionspolymere eingesetzt.

Der Einsatz einer Polymerdispersion, vorzugsweise einer wäßrigen Dispersion, hat gegenüber Redispersionspulvem - neben weiteren anderen Vorteilen (z. B. Preis, bessere Anmachbarkeit und Benetzbarkeit der übrigen Inhaltsstoffe etc.) - insbesondere den entscheidenden Vorteil, daß die entsprechende Anmachwassermenge bereits vorgegeben werden kann, so daß Dosierfehler beim Anmachen entfallen.

Vorteilhafterweise handelt es sich bei der erfindungsgemäß eingesetzten Polymerdispersion um eine Kunststoffdispersion. Aufgrund der zuvor geschilderten Nachteile epoxidharzbasierter Systeme wird erfindungsgemäß bevorzugt eine nichtepoxidharzbasierte Polymerdispersion, vorzugsweise eine nichtepoxidharzbasierte Kunststoffdispersion, eingesetzt. Für die Einarbeitung der weiteren Inhaltsstoffe sowie für eine verbesserte Anwendung ist es vorteilhaft, wenn die erfindungsgemäß eingesetzte Polymerdispersion darüber hinaus ionisch modifiziert, vorzugsweise anionisch modifiziert, ist.

Erfindungsgemäß bevorzugt eingesetzte Polymerdispersionen sind als wäßrig basiertes bzw. wäßriges, vorzugsweise ammoniakfreies Dispersionssystem formuliert. Üblicherweise weisen die erfindungsgemäß eingesetzten Polymerdispersionen einen Feststoffgehalt (DIN ISO 1625-D) von 30 bis 75 %, insbesondere 40 bis 65 %, bevorzugt 50 bis 60 %, bezogen auf die Polymerdispersion, auf.

Im allgemeinen weisen die Polymerpartikel der erfindungsgemäß eingesetzten Polymerdispersionen Teilchengrößen (Teilchendurchmesser), insbesondere mittlere Teilchengrößen, von 0,001 bis 5 µm, insbesondere 0,01 bis 3 µm, vorzugsweise 0,05 bis 2 µm, besonders bevorzugt 0,1 bis 1,0 µm, auf.

Erfindungsgemäß bevorzugte Polymerdispersionen weisen einen pH-Wert (DIN ISO 976) von im allgemeinen 7,0 bis 8,5 auf. Darüber hinaus besitzen erfindungsgemäß bevorzugt eingesetzte Polymerdispersionen bei 23 °C eine Viskosität von 10 bis 500 mPa·s, insbesondere 50 bis 200 mPa·s, Weiterhin besitzen erfindungsgemäß bevorzugt eingesetzte Polymerdispersionen eine Dichte (DIN 53217, ISO 2811) von 0,9 bis 1,1 g/cm³, insbesondere 0,95 bis 1,05 g/cm³. Erfindungsgemäß bevorzugt eingesetzte Polymerdispersionen weisen zudem eine Mindestfilmbildungstemperatur (DIN ISO 2115) unterhalb von 5 °C, insbesondere unterhalb von 1 °C, auf.

Für optimale Anwendungseigenschaften ist es von Vorteil, wenn die ausgehend von der erfindungsgemäß eingesetzten Polymerdispersion erhältlichen Filme eine Glasübergangstemperatur Tg (DSC) unterhalb von -5 °C, insbesondere im Bereich von - 5 °C bis -50 °C, vorzugsweise -20 °C bis -40 °C, besonders bevorzugt etwa -30 °C, aufweisen; grundsätzlich ist es aber auch möglich, Polymere mit höheren Glasübergangstemperaturen der resultierenden Filme einzusetzen, sofern diese mit geeigneten Weichmachern kombiniert werden. Des weiteren ist es von Vorteil, wenn die ausgehend von der erfindungsgemäß eingesetzten Polymerdispersion erhältlichen Filme eine Reißkraft (in Anlehnung an DIN 53455) von mindestens 0,1 N/mm², insbesondere mindestens 0,2 N/mm², und/oder eine Reißdehnung (in Anlehnung an DIN 53455) von mindestens 1.000 %, vorzugsweise mindestens 2.000 %, besitzen. Erfindungsgemäß werden üblicherweise alkaliresistente bzw. verseifungsstabile Polymerdispersionen bzw. Polymere eingesetzt.

Insbesondere werden als Polymerdispersionen vorzugsweise wäßrige Polymerdispersionen eines Polymeren oder eines Gemisches von mindestens zwei Polymeren eingesetzt. Bei den Polymeren oder dem Gemisch aus zwei oder mehr Polymeren handelt es sich vorzugsweise um radikalisch polymerisierte Polymere, wie sie sich insbesondere aus ethylenisch ungesättigten Monomeren erhalten lassen. Das Polymer enthält vorzugsweise sogenannte Hauptmonomere, insbesondere ausgewählt aus C₁-C₂₀-Alkyl(meth-)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, nichtaromatischen Kohlenwasserstoffen mit mindestens 2 konjugierten Doppelbindungen oder Mischungen dieser Monomeren. Im einzelnen zu nennen sind z. B. Acrylsäurealkylester oder Methacrylsäurealkylester mit einem C₁-C₁₂-Alkylrest, wie Methylmethacrylat, Methylacrylat, n-Butylacrylat, Ethylacrylat und 2-Ethylhexylacrylat. Insbesondere sind auch Polymere geeignet, die sich durch Polymerisation von Gemischen von Acrylsäurealkylestern und (Meth-)Acrylsäurealkylestern erhalten lassen. Zur Herstellung erfindungsgemäß geeigneter Polymere eignen sich beispielsweise auch die Vinylester von Carbonsäuren mit 1 bis 20 C-Atomen. Zur Herstellung erfindungsgemäß geeigneter Polymere geeignet sind z. B. Vinyllaurat, Vinylstearat, Vinylpropionat, Versatsäurevinylester oder Vinylacetat oder Gemische aus zwei oder mehren der vorgenannten Verbindungen. Als vinylaromatische Verbindungen eignen sich beispielsweise Vinyltoluol, α- und p-Methylstyrol, α-Butylstyrol, 4-n-Butylstyrol, 4-n-Decylstyrol und Styrol. Beispiele für geeignete Nitrile sind Acrylnitril und Methacrylnitril. Zur Herstellung erfindungsgemäß geeigneter Polymere eignen sich ebenfalls Vinylhalogenide, beispielsweise mit Chlor, Fluor oder Brom substituierte, ethylenisch ungesättigte Verbindungen, wie Vinylchlorid oder Vinylidenchlorid oder deren Gemische. Zur Herstellung erfindungsgemäß geeignete Polymerer eignen sich darüber hinaus nichtaromatische Kohlenwasserstoffe mit 2 bis 8 C-Atomen und mindestens zwei olefinischen Doppelbindungen, wie Butadien, Isopren, und Chloropren. Weitere Monomere, die z. B. von 0 bis 40 Gew.-%, vorzugsweise von 0 bis 20 Gew.% und besonders bevorzugt von 0,2 bis 10 Gew.-% in dem oder den Polymeren enthalten sein können, sind insbesondere C₁C₁₀-Hydroxyalkyl(meth-)acrylate, (Meth-)Arylamid sowie dessen am Stickstoff mit C₁-C₄-Alkyl substituierten Derivate, ethylenisch ungesättigte Carbonsäuren, Dicarbonsäuren, deren Halbester und Anhydride, z. B. (Meth-)Acrylsäure, Maleinsäure, Fumarsäure, Maleinsäureanhydrid, Maleinsäure- und Fumarsäurehalbester und Itaconsäure.

Erfindungsgemäß bevorzugt werden Polymerdispersionen bzw. entsprechende Redispersionspulver auf Basis von vinyl-, (meth-)acryl-, styrol-, butadien- und/oder ethylenbasierten Polymeren eingesetzt, wobei der Begriff der Polymere erfindungsgemäß weit zu verstehen ist und nicht nur Polymere im engeren Sinne, sondern auch Copolymere, Terpolymere etc. umfaßt. Insbesondere werden Polymerdispersionen bzw. entsprechende Redispersionspulver eingesetzt, welche auf Vinyl- oder Acrylat-Basis, wie Vinylacetat, Vinylpropionat, Vinyllaurat, Vinylversatat, Vinylchlorid, Vinylidenchlorid und/oder geradkettigen oder verzweigten Vinylestern mit 1 bis 20 C-Atomen, Acryl- und Methacryl-Monomeren (insbesondere Estern), Styrol, Butadien und/oder Ethylen aufgebaut sind.

Wie zuvor beschrieben, können als Polymerdispersionen die unterschiedlichsten Systeme zum Einsatz kommen. Vorzugsweise werden als Polymerdispersionen Dispersionen auf Basis von Styrol/(Meth-)Acrylat-Copolymeren, Styrol/Butadien-Copolymeren und/oder Vinylacetat/Ethylen-Copolymeren, eingesetzt. Besonders vorteilhafte Eigenschaften werden mit Polymerdispersionen von Styrol/Acrylat-Copolymeren (z. B. Acronal^{®} DS 3511 oder Acronal^{®} S 456 der BASF Aktiengesellschaft, Ludwighafen, oder Mowilith LDM 6482 der Fa. Celanese, Frankfurt) erreicht; denn die Anmelderin hat überraschenderweise herausgefunden, daß Dispersionen auf Basis von Styrol/Acrylat-Copolymeren im Rahmen der erfindungsgemäßen Baustoffzusammensetzung zu einer besonders guten Standfestigkeit und Wasserfestigkeit der resultierenden Abdichtung bzw. des resultierenden Films führen, da der resultierende Film besonders konsistent und kohärent bleibt. Dennoch sind grundsätzlich alle vorgenannten Kunststoffdispersionen geeignet, um im Rahmen der erfindungsgemäßen Baustoffzusammensetzung eingesetzt zu werden.

Die vorgenannten Polymerdispersionen enthalten keine Epoxidharze. Infolgedessen sind sie umweltfreundlich und praxisgerechter bzw. einfacher in der Verarbeitung und Handhabung. Zudem ist der Preis der erfindungsgemäßen Baustoffzusammensetzung gegenüber epoxidharzbasierten Systemen hierdurch deutlich reduziert.

Was die erfindungsgemäß eingesetzten Polystyrolpartikel anbelangt, so können diese insbesondere in Form von sogenannten Polystyrolperlen oder Polystyrolkügelchen oder in Form von Polystyrolgranulat vorliegen. Erfindungsgemäß bevorzugt eingesetzte Polystyrolpartikel weisen Teilchengrößen (Teilchendurchmesser) im Bereich von 0,1 bis 3,0 mm, insbesondere 0,2 bis 2,0 mm, vorzugsweise 0,5 bis 1,5 mm, auf und besitzen Schüttdichten im allgemeinen von 5 bis 30 g/l, insbesondere 7,5 bis 15 g/l, vorzugsweise 10 bis 13 g/l.

Gemäß einer erfindungsgemäß besonders bevorzugten Ausführungsform können die Polystyrolpartikel aus expandierbarem und/oder expandiertem Polystyrol gebildet sein. Expandierbares Polystyrol enthält im allgemeinen mindestens ein geeignetes Treibmittel, vorzugsweise ein Alkan, insbesondere Pentan und/oder Pentanisomere.

Erfindungsgemäß besonders bevorzugte Polystyrolpartikel sind beispielsweise unter der Bezeichnung "NOVA Chemicals^{®}" von der NOVA Brands Ltd. erhältlich.

Was die erfindungsgemäß eingesetzten keramischen Mikrohohlkugeln anbelangt, so sind diese im allgemeinen auf Basis von Silikaten, insbesondere Aluminium- und/oder Borosilikaten, bevorzugt Aluminiumsilikaten, gebildet. Darüber hinaus können noch geringere Mengen an anderen mineralischen Oxiden, insbesondere Fe₂O₃ und TiO_{2,} vorhanden sein, jedoch mit der Maßgabe, daß der Aluminiumsilikatanteil, d. h. der Anteil an SiO₂ und Al₂O₃ zusammen, mehr als 95 % beträgt.

Erfindungsgemäß geeignete keramische Mikrohohlkugeln weisen im allgemeinen Teilchengrößen (Teilchendurchmesser) von 1 bis 500 µm, insbesondere 1 bis 350 µm, vorzugsweise 10 bis 300 µm, auf und besitzen im allgemeinen mittlere Teilchengrößen von 100 bis 160 µm, insbesondere 120 bis 150 µm, vorzugsweise 125 bis 140 µm.

Im Rahmen der vorliegenden Erfindung ist es vorteilhaft, wenn die eingesetzten keramischen Mikrohohlkugeln Schüttgewichte von 100 bis 600 g/l, insbesondere 250 bis 500 g/l, vorzugsweise 350 bis 475 g/l, und/oder Schüttvolumina von 1.800 bis 3.000 ml/1.000 g, insbesondere 2.000 bis 2.100 ml/1.000 g, vorzugsweise 2.100 bis 2.800 ml/1.000 g, aufweisen.

Des weiteren besitzen erfindungsgemäß einsetzbare keramische Mikrohohlkugeln im allgemeinen Dichten im Bereich von 0,5 bis 1,0 g/cm³, insbesondere 0,6 bis 0,9 g/cm³, vorzugsweise 0,7 bis 0,8 g/cm³. Weiterhin weisen erfindungsgemäß einsetzbare keramische Mikrohohlkugeln im allgemeinen Härten nach Mohs von mindestens 4, insbesondere mindestens 4,5, bevorzugt mindestens 5, besonders bevorzugt im Bereich von 5 bis 6, und/oder Druckfestigkeiten von mindestens 12 MPa, insbesondere mindestens 13 MPa, vorzugsweise mindestens 14 MPa, auf.

Um einerseits eine gewisse mechanische Stabilität der keramischen Mikrohohlkugeln zu gewährleisten und andererseits das spezifische Gewicht dieser keramischen Mikrohohlkugeln zu reduzieren, haben erfindungsgemäß bevorzugt eingesetzte keramische Mikrohohlkugeln einen Hüllendurchmesser, welcher nur 5 bis 15 %, vorzugsweise nur etwa 10 %, der gesamten keramischen Mikrohohlkugeln ausmacht, d. h. mit anderen Worten werden 85 bis 95 %, vorzugsweise etwa 90 %, der keramischen Mikrohohlkugeln vom durch die Hülle ausgebildeten bzw. umschlossenen Hohlraum gebildet.

Erfindungsgemäß geeignete keramische Mikrohohlkugeln werden von einer Reihe von Anbietern angeboten, z. B. von den Firmen Omega Minerals Germany GmbH, Advanced Minerals Ltd., Trelleborg Fillite Ltd., Envirospheres Pty. Ltd. und AshTek Corporation. Erfindungsgemäß besonders bevorzugt eingesetzte keramische Mikrohohlkugeln werden von der Omega Minerals Germany GmbH vertrieben, insbesondere die Produkte der Serie "Omega-Spheres", so z. B. "Omega-Spheres W300", oder aber "Isospheres SG 300".

Im Rahmen der vorliegenden Erfindung ist es möglich, den Anteil an keramischen Mikrohohlkugeln ganz oder teilweise durch Glasmikrohohlkugeln zu ersetzen. Vorteilhafterweise werden jedoch keramische Mikrohohlkugeln eingesetzt.

Was die erfindungsgemäß eingesetzten synthetischen Mikrohohlkugeln anbelangt, so sind diese im allgemeinen auf Basis von organischen Polymeren ausgebildet. Zum Einsatz kommen beispielsweise organische Polymere auf Basis von Monomeren aus der Gruppe von Vinylidenchlorid, Acrylnitril und/oder Methyl(meth-)acrylaten, vorzugsweise Vinylidenchlorid/Acrylnitril-Copolymere; solche Produkte werden beispielsweise von den Firmen Akzo Nobel ("Expancel^{®} WE") oder Sika Addiment GmbH vertrieben. Alternativ können solche synthetischen Mikrohohlkugeln auch auf Basis von Phenolharzen ausgebildet sein (z. B. Produkte von der Fa. Asia Pacific Microspheres Sdn. Bhd., Malaysia). Erfindungsgemäß bevorzugt werden aber synthetische Mikrohohlkugeln auf Basis von Vinylidenchlorid/Acrylnitril-Copolymeren oder auf Basis von Polymeren, welche auf den Monomeren Vinylidenchlorid und/oder Acrylnitril und/oder Methyl(meth-)acrylaten basieren, eingesetzt.

Was die erfindungsgemäß eingesetzten synthetischen Mikrohohlkugeln anbelangt, so weisen diese im allgemeinen Teilchengrößen (Teilchendurchmesser) von 1 bis 300 µm, insbesondere 1 bis 200 µm, vorzugsweise 5 bis 150 µm, besonders bevorzugt 10 bis 150 µm, und/oder mittlere Teilchengrößen von 10 bis 100 µm, insbesondere 20 bis 80 µm, vorzugsweise 20 bis 60 µm, auf.

Die erfindungsgemäß einsetzbaren synthetischen Mikrohohlkugeln können beispielsweise in expandierbarer und/oder expandierter Form vorliegen. Derartige synthetische Mikrohohlkugeln, insbesondere in expandierbarer Form, können ein Treibmittel, vorzugsweise ein Alkan, insbesondere Pentan und/oder Pentanisomere, enthalten, wobei das Treibmittel bei Erwärmen über eine bestimmte Temperatur die expandierbaren Kugeln zur Expansion und somit zur endgültigen Teilchengröße bringt.

Erfindungsgemäß bevorzugt eingesetzte synthetische Mikrohohlkugeln weisen einen Feststoffgehalt von 5 bis 20 %, insbesondere 7 bis 17 %, bezogen auf die synthetischen Mikrohohlkugeln, auf. Der übrige Anteil entfällt auf den vom Hüllmaterial umschlossenen Hohlraum.

Wie zuvor beschrieben, enthält die erfindungsgemäße Baustoffzusammensetzung, insbesondere die bitumenfreie Abdichtungsmasse, neben den zuvor beschriebenen Inhaltsstoffen gegebenenfalls mindestens ein Bindemittel. Unter dem Begriff des Bindemittels wird erfindungsgemäß insbesondere eine Sammelbezeichnung für solche Stoffe verstanden, welche gleich- oder verschiedenartige Stoffe miteinander verbinden. Zum Einsatz kommen können im Rahmen der vorliegenden Erfindung hydraulische, latenthydraulische oder nichthydraulische Bindemittel, insbesondere hydraulische und latenthydraulische Bindemittel, besonders bevorzugt hydraulische Bindemittel. Solche Bindemittel, die nur an Luft erhärten ("Luftbinder", wie Gips, Soralzement, Anhydrit, Magnesia-Bindemittel, Weißkalk etc.) bezeichnet man als nichthydraulische Bindemittel, während man beispielsweise hydraulischen Kalk und viele andere Zemente als hydraulische Bindemittel bezeichnet, die auch unter Wasser abbinden. Erfolgt dieses Abbinden erst durch Einwirkung von Zusätzen bzw. Anregern, dann spricht man von sogenannten latenthydraulischen Bindemitteln (z. B. Hochofenschlacke). Für weitere Einzelheiten zum Begriff des Bindemittels kann beispielsweise verwiesen werden auf Römpp Chemielexikon, 10. Auflage, Band 1, 1996, Georg Thieme Verlag, Stuttgart/New York, Seiten 433/434, Stichwort: "Bindemittel", sowie auf die dort referierte Literatur.

Erfindungsgemäß geeignete Bindemittel können ausgewählt sein aus der Gruppe von Zementen; Kalk; Weißkalk; Calciumsulfaten, wie Anhydrit und Gips; Schlacken, wie Hochofenschlacken; Filteraschen; sowie Mischungen der vorgenannten Verbindungen.

In einer erfindungsgemäß besonders bevorzugter Ausführungsform wird als Bindemittel ein Zement eingesetzt. Für weitere diesbezügliche Einzelheiten zum Begriff des Zements wird verwiesen auf Römpp Chemielexikon, 10. Auflage, Band 6, 1999, Georg Thieme Verlag, Stuttgart/New York, Seiten 5049 bis 5051, Stichwort: "Zement", sowie auf die dort referierte Literatur. Besonders bevorzugt wird sogenannter Portlandzement verwendet.

Im Rahmen der Baustoffzusammensetzung nach der vorliegenden Erfindung übt das Bindemittel, insbesondere der Zement, eine Doppelfunktion aus: Zum einen "bricht" das Bindemittel sozusagen die Polymerdispersion, so daß nach Auftrag der erfindungsgemäßen Baustoffzusammensetzung ein Verfilmungsprozeß einsetzen kann, und zum anderen bindet das Bindemittel überschüssiges Wasser, welches nicht durch einen physikalischen Vorgang, insbesondere durch Verdampfen, beim Abtrocknen entfernt wird. Insbesondere bewirkt das erfindungsgemäß fakultativ eingesetzte Bindemittel eine erhöhte Festigkeit bzw. eine verbesserte Kohäsion, insbesondere eine erhöhte Frühstandfestigkeit, der aufgetragenen Baustoffzusammensetzung nach ihrer Anwendung bzw. Applikation.

Die Einarbeitung einer Bindemittelkomponente, insbesondere von Zement, führt neben einem schnelleren "Brechen" der Dispersion und einer damit einhergehenden besseren Verfilmbarkeit zu schnelleren bzw. kürzeren Aushärtungszeiten und zudem zu einer Verbesserung des Schwundverhaltens.

Neben den zuvor beschriebenen Inhaltsstoffen bzw. Komponenten kann die Baustoffzusammensetzung nach der vorliegenden Erfindung außerdem weitere Inhaltsstoffe und/oder Additive enthalten. Diese können insbesondere ausgewählt sein aus der Gruppe von Netzmitteln, Entschäumern, Konservierungsmitteln, Verdickungsmitteln, Verflüssigern, anorganischen Füllstoffen, mineralischen Zuschlagsstoffen, Erstarrungsverzögerem, Erstarrungsbeschleunigern, Fasern, Pigmenten etc. sowie Mischungen der zuvor genannten Stoffe.

Wenn der erfindungsgemäßen Baustoffzusammensetzung beispielsweise ein zusätzliches Verdickungsmittel zur Einstellung der Fließfähigkeit bzw. Viskosität zugesetzt wird, so können vorteilhafterweise Methylhydroxyethylcellulose ("Tylose") und/oder Xanthangummi, vorzugsweise Methylhydroxyethylcellulose und Xanthangummi, zum Einsatz kommen. Der Einsatz von Xanthangummi in der erfindungsgemäßen Baustoffzusammensetzung hat den besonderen Vorteil, daß das Xanthangummi der Zusammensetzung neben einem Verdickungseffekt zusätzlich thixotrope Eigenschaften verleiht, was bei der Anwendung von besonderem Vorteil ist. Anstelle von Xanthangummi kann gleichermaßen Kieselsäure zugesetzt sein, welche - vergleichbar mit Xanthangummi - sowohl als Verdickungs- wie auch als Stell- bzw. Thixotropierungsmittel dient. Auch können Mischungen von Xanthangummi und Kieselsäure, gegebenenfalls zusammen mit Methylhydroxyethylcellulose, als Verdickungsmittel eingesetzt werden.

Darüber hinaus können in die erfindungsgemäße Baustoffzusammensetzung auch Recyclingstoffe, z. B. Gummigranulate etc., eingearbeitet sein.

Grundsätzlich kann die erfindungsgemäße Baustoffzusammensetzung entweder als Einkomponenten-System (1K-System) oder als Zweikomponenten-System (2K-System) formuliert sein. Bevorzugt ist die Formulierung als Zweikomponenten-System.

Im Falle der Formulierung als Einkomponenten-System wird als Polymerkomponente vorzugsweise ein Redispersionspulver der vorgenannten Art eingesetzt. In diesem Fall kann die erfindungsgemäße Baustoffzusammensetzung insbesondere als 1-K-Trockensystem bzw. 1-K-Pulversystem formuliert sein, d. h. ausschließlich aus einer einzigen Feststoffkomponente bzw. aus einer einzigen Feststoffmischung bestehen, die dann vor ihrer Verwendung mit der erforderlichen Wassermenge angemacht wird.

Im Falle der erfindungsgemäß bevorzugten Formulierung als Zweikomponenten-System wird als Polymerkomponente üblicherweise eine Polymerdispersion eingesetzt und liegen Polymerdispersion einerseits und gegebenenfalls vorhandenes Bindemittel andererseits vorteilhafterweise in unterschiedlichen Komponenten vor, wobei die Polymerdispersion im allgemeinen Bestandteil einer Flüssigkomponente ist, wohingegen das Bindemittel grundsätzlich Bestandteil einer Feststoff- bzw. Pulverkomponente oder einer Flüssigkomponente ist, vorzugsweise aber Bestandteil einer Feststoff- bzw. Pulverkomponente ist. Grundsätzlich besteht aber auch bei dieser Ausführungsform die Möglichkeit, anstelle der Polymerdispersion das entsprechende Redispersionspulver zu verwenden, wobei dies jedoch erfindungsgemäß weniger bevorzugt ist; nachfolgend wird das erfindungsgemäß bevorzugte 2K-System jedoch ausschließlich auf Basis der Polymerdispersion beschrieben, wobei für den Fachmann selbstverständlich ist, daß er anstelle der Polymerdispersion auch das entsprechende Redispersionspulver einsetzen kann, sofern dies vor Anwendung mit der entsprechenden Wassermenge angemacht wird.

Gemäß einer besonderen Ausführungsform der vorliegenden Erfindung ist Gegenstand der vorliegenden Erfindung somit eine Baustoffzusammensetzung, insbesondere eine bitumenfreie Abdichtungsmasse, insbesondere wie zuvor beschrieben, wobei die Baustoffzusammensetzung als Zweikomponenten-System (2K-System) formuliert ist, wobei das Zweikomponenten-System einerseits eine Komponente (A), insbesondere als Flüssigkomponente, und andererseits eine Komponente (B), insbesondere als Trocken- bzw. Pulverkomponente oder aber als Flüssigkomponente, vorzugsweise als Trocken- bzw. Pulverkomponente, umfaßt,
- wobei die Komponente (A), jeweils mengenbezogen auf die Komponente (A),
   - mindestens eine Polymerdispersion, insbesondere in Mengen von 2 bis 100 Gew.-Teilen, vorzugsweise 30 bis 80 Gew.-Teilen, besonders bevorzugt 40 bis 60 Gew.-Teilen,
   - Polystyrolpartikel, insbesondere in Mengen von 0,01 bis 10 Gew.-Teilen, vorzugsweise 0,05 bis 5 Gew.-Teilen, besonders bevorzugt 0,1 bis 2,5 Gew.-Teilen,
   - keramische Mikrohohlkugeln, insbesondere in Mengen von 0,1 bis 60 Gew.-Teilen, vorzugsweise 0,2 bis 50 Gew.-Teilen, besonders bevorzugt 0,5 bis 10 Gew.-Teilen,
   - synthetische Mikrohohlkugeln, insbesondere in Mengen von 0,01 bis 30 Gew.-Teilen, vorzugsweise 0,05 bis 15 Gew.-Teilen, besonders bevorzugt 0,1 bis 5 Gew.-Teilen,
   - gegebenenfalls mindestens einen anorganischen Füllstoff oder mineralischen Zuschlag, vorzugsweise Calciumcarbonat und/oder SiO₂, SiO₂ bevorzugt in Form von Quarzsand, insbesondere in Mengen von insgesamt 2 bis 160 Gew.-Teilen, vorzugsweise 5 bis 100 Gew.-Teilen, besonders bevorzugt 10 bis 50 Gew.-Teilen,
   - gegebenenfalls mindestens ein weiteres Additiv, insbesondere aus der Gruppe von Netzmitteln, Entschäumern, Konservierungsmitteln und/ oder Verdickungsmitteln, insbesondere in Mengen von insgesamt 0,01 bis 5 Gew.-Teilen, vorzugsweise 1 bis 5 Gew.-Teilen, und
   - gegebenenfalls zusätzliches Wasser, insbesondere in Mengen von 0,1 bis 10 Gew.-Teilen, vorzugsweise 1 bis 5 Gew.-Teilen, enthält und
- wobei die Komponente (B), jeweils mengenbezogen auf die Komponente (B),
   - mindestens ein Bindemittel, vorzugsweise Zement, insbesondere in Mengen von 1 bis 100 Gew.-Teilen, vorzugsweise 5 bis 50 Gew.-Teilen, besonders bevorzugt 5 bis 15 Gew.-Teilen,
   - gegebenenfalls mindestens einen anorganischen Füllstoff oder mineralischen Zuschlag, vorzugsweise Calciumcarbonat, bevorzugt in Form von Kalksteinmehl, und/oder SiO₂, SiO₂ bevorzugt in Form von Quarzsand, insbesondere in Mengen von insgesamt 2 bis 200 Gew.-Teilen, vorzugsweise 50 bis 150 Gew.-Teilen, besonders bevorzugt 80 bis 100 Gew.-Teilen,
enthält.

In der erfindungsgemäß weniger bevorzugten Ausführungsform, wonach auch die Komponente (B) als Flüssigkomponente formuliert ist, kann die Komponente (B) ein Dispergiermittel, insbesondere ein gegenüber dem Bindemittel inertes Dispergiermittel, enthalten, welches insbesondere ausgewählt sein kann aus der Gruppe von organischen Lösemitteln, wie organischen Kohlenwasserstoffen, Ölen, insbesondere Mineral- und Paraffinölen, Weichmachern und dergleichen, wobei der Siedepunkt bzw. der Siedebereich dieser organischen Verbindungen bei Atmosphärendruck mindestens 200 °C betragen sollte. Die Menge an Dispergiermittel(n) in der Komponente (B) kann bei dieser Ausführungsform in weiten Bereichen variieren; insbesondere beträgt sie 1 bis 1.000 Gew.-Teile, insbesondere 50 bis 500 Gew.-Teile, besonders bevorzugt 100 bis 200 Gew.-Teile.

Die Komponente (A) einerseits und die Komponente (B) andererseits können dabei in variablen Mischungsverhältnissen eingesetzt werden. Beispielsweise kann das Mischungsverhältnis von (A) : (B) im Bereich von 30 : 1 bis 1 : 1, insbesondere 10 : 1 bis 1 : 1, vorzugsweise 4 : 1 bis 1 : 1, bevorzugt 3 : 1 bis 1 : 1, variieren. Gemäß einer besonders bevorzugten Ausgestaltung beträgt das Mischungsverhältnis (A) : (B) etwa 2 : 1.

Zu Zwecken der Anwendung werden im Falle des Zweikomponenten-Systems die beiden Komponenten (A) und (B) vorteilhafterweise unmittelbar vor der Anwendung in Kontakt gebracht, insbesondere miteinander vermischt bzw. homogenisiert, so daß eine innige bzw. homogene Mischung der Komponenten (A) und (B) bei der Anwendung vorliegt.

Wie zuvor beschrieben, können sowohl der Komponente (A) als auch der Komponente (B) vorteilhafterweise anorganische Füllstoffe bzw. mineralische Zuschläge ("schwere Füllstoffe" bzw. "schwere Zuschläge") zugesetzt sein. Dabei wird insbesondere derart vorgegangen, daß der Flüssigkomponente (A) relativ feinkörnige Zuschläge bzw. Füllstoffe, insbesondere mit einer Sieblinie von 0 bis 0,5 mm, zugesetzt werden, während der Feststoff- bzw. Pulverkomponente (B) tendenziell eher relativ grobkörnige Zuschläge bzw. Füllstoffe, insbesondere mit einer Sieblinie von 0 bis 1 mm, zugesetzt werden. Auf diese Weise kann eine stetige bzw. nichtintermittierende Sieblinie aufgebaut werden. Auf diese Weise wird eine vernünftige Packungsdichte ohne Lufteinschluß erreicht und die Druckfestigkeit bzw. Stabilität des Endprodukts erhöht, was insbesondere von Bedeutung ist, wenn die Baustoffzusammensetzung nach der vorliegenden Erfindung als Abdichtungsmasse im erdberührten Bereich zum Einsatz kommt.

Erfindungsgemäß bevorzugt ist es, wenn die Flüssigkomponente (A) im allgemeinen eine Dichte von 0,5 bis 1,0 kg/l, insbesondere 0,6 bis 0,8 kg/l, vorzugsweise 0,70 bis 0,80 kg/l, aufweist, während die Komponente (B), insbesondere als Feststoffkomponente (B), eine Dichte von 0,8 bis 2,5 kg/l, insbesondere 1,5 bis 2,1 kg/l, vorzugsweise 1,60 bis 1,70 kg/l, aufweist. Insbesondere sollte die Dichte der Feststoffkomponente (B) mindestens das 1,5fache, insbesondere mindestens das 1,7fache, insbesondere mindestens das 2fache, der Dichte der Flüssigkomponente (A) betragen. Dies ermöglicht ein schnelles und homogenes, insbesondere staubfreies Anrühren bzw. Mischen der beiden Komponenten vor der Anwendung.

Die Tatsache, daß für den Fall des Zweikomponenten-Systems die Polystyrolpartikel, die keramischen Mikrohohlkugeln und die synthetischen Mikrohohlkugeln in der Flüssigkomponente (A) vorliegen, hat den Vorteil, daß eine Entmischung dieser Bestandteile nicht stattfindet. Vielmehr wird aufgrund des großen Dichteunterschiedes - die schweren Inhaltsstoffe und Zuschläge befinden sich im wesentlichen in der Feststoffkomponente (B), während die leichten Inhaltsstoffe und Zuschläge sich in der Flüssigkomponente (A) befinden - eine exzellente Mischbarkeit der beiden Komponenten (A) und (B) miteinander erreicht, was eine rasche Anwendung ermöglicht.

Die erfindungsgemäße Baustoffzusammensetzung, insbesondere die bitumenfreie Abdichtung nach der vorliegenden Erfindung, weist insgesamt eine Vielzahl von Vorteilen auf:

Zum einen ist sie aufgrund der Inhaltsstoffe umweltfreundlich und preisgünstig, was ihre Anwendung begünstigt. Nach ihrem Auftrag als Abdichtungsmasse zeigt sie im wesentlichen keine Schrumpfung.

Die erfindungsgemäße Baustoffzusammensetzung - unabhängig von ihrer Formulierung als Einkomponenten- oder Zweikomponenten-System - zeigt ausgezeichnete Abdichtungseigenschaften, wie sie herkömmlicherweise nur mit bitumenhaltigen Abdichtungsmassen nach dem Stand der Technik erreicht werden können. Insbesondere erfüllt die erfindungsgemäße Baustoffzusammensetzung die Anforderungen, wie sie in der eingangs genannten DIN 18195 an bitumenhaltige Abdichtungsmassen und in den entsprechenden Richtlinien an zementäre bzw. mineralische Dichtschlämme und an kunststoffmodifizierte Bitumendickbeschichtungen gestellt sind.

Die erfindungsgemäße Baustoffzusammensetzung eignet sich für die Bauwerksabdichtung, insbesondere im erdberührten Bereich, aber auch für die Dachabdichtung. Insbesondere ist die erfindungsgemäße Baustoffzusammensetzung auch dickschichtig, und zwar auch an senkrechten Wänden, verarbeitbar bzw. auftragbar.

Überraschenderweise ist die erfindungsgemäße Baustoffzusammensetzung, obwohl sie auf Basis von relativ teuren Polymerdispersionen rezeptiert wird, auf dem gleichen Preisniveau wie Bitumenemulsionen entwickelt worden. Ferner überrascht, daß die erfindungsgemäße Baustoffzusammensetzung im Falle einer Zweikomponenten-Formulierung sehr schnell, insbesondere ohne große Staubentwicklung, anzumischen ist (d. h. Anrühren der Flüssigkomponente mit der Pulverkomponente). Weiterhin überrascht, daß auch in höheren Schichidicken ein praktisch schwundfreies Erhärten der Abdichtung stattfindet; dies ist besonders wichtig und bietet eine hohe Sicherheit, da es infolgedessen nicht zum Auftreten von Schwundrissen kommen kann, welche zwangsläufig zu Undichtigkeiten führen würden.

Das im wesentlichen schwundfreie Abtrocknen bzw. Aushärten kann beispielsweise wie folgt veranschaulicht werden: Wenn die erfindungsgemäße Baustoffzusammensetzung im nassen Zustand mit einer Schichtdicke beispielsweise von etwa 3 mm aufgetragen wird, resultiert eine Beschichtung, welche auch im abgetrockneten bzw. ausgehärteten Zustand eine Schichtdicke in derselben Größenordnung (d. h. also von etwa 3 mm) aufweist; infolgedessen wird eine exzellente Kohäsion der erfindungsgemäßen Abdichtung unter Vermeidung von jeglichen Schwundrissen erreicht. Abdichtungssysteme des Standes der Technik dagegen zeigen im allgemeinen beim Abtrocknen bzw. Aushärten einen Schwund bzw. eine Schrumpfung von etwa 20 bis 25 %: Werden Systeme des Standes der Technik beispielsweise im nassen Zustand mit einer Schichtdicke von 4 mm aufgetragen, so resultieren Abdichtschichten im trockenen bzw. ausgehärteten Zustand von nur 3 mm, was in der Praxis zu einer signifikanten Rißbildung führt, wenn man dieses Phänomen bei der Anwendung nicht ausreichend berücksichtigt

Die zuvor genannten Besonderheiten sind in der speziellen Rezeptur der erfindungsgemäßen Baustoffzusammensetzung begründet, insbesondere in der Kombination einer im allgemeinen wäßrigen Polymerdispersion mit wiederum einer Kombination spezieller Leichtzuschläge, nämlich Polystyrolpartikeln, synthetischen Mikrohohlkugeln und keramischen Mikrohohlkugeln, sowie gegebenenfalls mit mindestens einem Bindemittel. Die Anmelderin hat überraschenderweise herausgefunden, daß nur mit dieser synergistisch wirkenden Kombination die zuvor beschriebenen Effekte erreicht werden können.

Die Inkorporierung der Leichtfüllstoffe auf Basis von Styrolpartikeln sowie keramischen und synthetischen Mikrohohlkugeln reduzieren darüber hinaus das Gewicht der erfindungsgemäßen Baustoffzusammensetzung, d. h. sie machen sie anschaulich gesprochen leichter, und erleichtern darüber hinaus den Aufziehwiderstand beim Auftrag. Insbesondere gewährleisten die Polystyrolpartikeln in Form von Kügelchen bzw. Perlen beim Auftrag einen gewissen Abrolleffekt.

Ein weiterer Vorteil der vorliegenden Erfindung ist darin zu sehen, daß im allgemeinen auf einen Weichmacher bzw. eine Weichmacherkomponente (Plastifizierungsmittel) üblicherweise verzichtet werden kann.

Insgesamt zeigt die erfindungsgemäße bitumenfreie Baustoffzusammensetzung - neben ausgezeichneten Abdichtungseigenschaften, wie sie herkömmlicherweise nur mit bitumenhaltigen Abdichtungsmassen erreicht werden können - also insbesondere ein ausgezeichnetes Schrumpfverhalten nach dem Auftrag.

Unabhängig davon, ob die erfindungsgemäße Baustoffzusammensetzung als Einkomponenten- oder Zweikomponenten-System formuliert wird, können neben den zuvor genannten Inhaltsstoffen außerdem auch noch bestimmte Leichtzuschläge zugesetzt sein, z. B. aus der Gruppe von Perliten, wie Blähperlit, Blähglas, Blähglimmer (Vermiculit), Blähschiefer, Blähton, gesinterter Steinkohlenflugasche, Bims, wie Naturbims und Hüttenbims, Ziegelsplitt, Tuff, Lava und Lavaschlacke sowie Bentoniten.

Des weiteren betrifft die vorliegende Erfindung - gemäß einem zweiten Aspekt der vorliegenden Erfindung - die Verwendung einer wie zuvor definierten Baustoffzusammensetzung nach der vorliegenden Erfindung für die Bauwerksabdichtung, insbesondere zum Abdichten und/oder zum Schutz von erdberührten Bauwerken und Bauteilen sowie von Dächern (Flachdächern).

Weiterhin betrifft die vorliegende Erfindung - gemäß einem dritten Aspekt der vorliegenden Erfindung - ein Verfahren zum Abdichten und/oder zum Schutz von Bauwerken oder von Bauteilen einschließlich Dächern, wobei eine wie zuvor definierte Baustoffzusammensetzung nach der vorliegenden Erfindung auf die betreffenden Bauwerke oder Bauteile in ausreichender Dicke appliziert und nachfolgend abtrocknen und aushärten gelassen wird.

Im Rahmen der erfindungsgemäßen Verwendung und im Rahmen des erfindungsgemäßen Verfahrens wird die erfindungsgemäße Baustoffzusammensetzung im allgemeinen mit einer Schichtdicke (Naßdicke) von 0,1 bis 10 mm, insbesondere 1 bis 5 mm, vorzugsweise 2 bis 4,5 mm, appliziert.

Weitere Ausführungsformen, Ausgestaltungen, Abwandlungen und Variationen der vorliegenden Erfindung sind für den Fachmann beim Lesen der vorliegenden Anmeldung ohne weiteres erkennbar und realisierbar, ohne daß er dabei den Rahmen der vorliegenden Erfindung verläßt.

Die vorliegende Erfindung wird anhand des nachfolgenden Ausführungsbeispiels veranschaulicht, welches die vorliegende Erfindung jedoch keinesfalls beschränken soll.

### Ausführungsbeispiel:

Eine Baustoffzusammensetzung, insbesondere eine bitumenfreie Abdichtungsmasse, nach der vorliegenden Erfindung wird als Zweikomponenten-System (2K-System) wie folgt formuliert:

### Komponente (A) (Flüssigkomponente):

| | |
|---|---|
| - Polymerdispersion (wäßrige, anionisch modifizierte, ammoniakfreie Dispersion von Styrol/Acrylat-Copolymeren) | 51 Gew.-% |
| - Netzmittel (wäßrige Lösung eines Natriumpolyacrylats) | 0,29 Gew.-% |
| - Nichtionischer Entschäumer | 1,16 Gew.-% |
| - Konservierungsmittel 0,15 Gew.% | |
| - Mineralischer Zuschlag I (Quarzsand (SiO₂)) | 19,3 Gew.-% |
| - Mineralischer Zuschlag II (Calciumcarbonat) | 19,3 Gew.-% |
| - Keramische Mikrohohlkugeln auf Aluminiumsilikatbasis | 4,8 Gew.-% |
| - Synthetische Mikrohohlkugeln | 0,96 Gew.% |
| - Styroporperlen (Dichte: 13 g/l) (Polystyrolpartikel) | 0,58 Gew.-% |
| - Verdickungsmittel I | 0,11 Gew.-% |
| - Verdickungsmittel II | 0,15 Gew.-% |
| - zusätzliches Wasser | 2,2 Gew.-% |
| | 100 Gew.-% |

### Komponente (B) (Feststoff- bzw. Trockenkomponente):

| | |
|---|---|
| - Hydraulisches Bindemittel (Portlandzement) | 10 Gew.-% |
| - Mineralischer Zuschlag I (Quarzsand) | 77,50 Gew.% |
| - Mineralischer Zuschlag II (Kalksteinmehl = Calciumcarbonat) | 12,50 Gew.-% |
| | 100 Gew.-% |

Die mineralischen Zuschläge der Komponente (A) liegen mit kleinerer Körnung als die mineralischen Zuschläge der Komponente (B) vor.

Die Komponente (A) weist eine Dichte von etwa 0,75 kg/l auf, während die Dichte der Komponente (B) etwa 1,63 kg/l beträgt.

Die zuvor genannten Komponenten (A) und (B) werden in einem Mischungsverhältnis (A) : (B) von etwa 2: 1 vermischt, so daß eine homogene Mischung resultiert

Die homogene Mischung wird anschließend auf eine Wandfläche von 8 m x 3 m mit einer Schichtdicke von etwa 4 mm im nassen Zustand aufgetragen. Nach Abtrocknen und Aushärten resultiert eine gleichermaßen etwa 4 mm dicke, rißfreie, kohärente Abdichtschicht, welche die Wandfläche vor Feuchtigkeitseinwirkung schützt. Die Abdichtfläche ist frei von jeglicher Rißbildung.

Der vorgenannte Versuch wird wiederholt, wobei jedoch in der Flüssigkomponente (A) abwechselnd die Polystyrolkomponente (Vergleichsversuch I) oder die keramischen Mikrohohlkugeln (Vergleichsversuch II) oder die synthetischen Mikrohohlkugeln (Vergleichsversuch III) weggelassen werden. Es wird in der gleichen Weise, wie vorstehend beschrieben, verfahren. Nach Auftrag der jeweiligen Mischungen auf die Wandfläche mit 4 mm Dicke im nassen Zustand wird bei den Produkten jeweils ohne die vorgenannte Komponente eine Rißbildung infolge von auftretender Schrumpfung beobachtet. Die abgetrockneten und ausgehärteten Abdichtschichten weisen infolge der Schrumpfung eine geringere Dicke jeweils deutlich unterhalb von 4 mm auf.

Das vorstehende Ausfiihrungsbeispiel belegt eindrucksvoll die Leistungsfähigkeit der erfindungsgemäßen Baustoffzusammensetzung infolge der speziellen Kombination der vorgenannten Leichtfüllstoffe im Rahmen einer bitumenfreien, nichtepoxidharzbasierten Polymerdispersion.

Anstelle der eingesetzten Kunststoffdispersion kann alternativ ein Redispersionspulver auf Basis von wäßrig redispergierbaren Styrol/Acrylat-Copolymeren eingesetzt werden, welches vor Anwendung dann mit der entsprechenden Wassermenge angemacht werden muß. Die Verwendung eines Redispersionspulvers ermöglicht die Formulierung als Einkomponenten-System (1K-System), sofern alle übrigen Komponenten als Trockenbestandteile ausgewählt werden.

## Patentansprüche

1. Baustoffzusammensetzung, insbesondere bitumenfreie Abdichtungsmasse, wobei die Baustoffzusammensetzung
- mindestens eine Polymerdispersion oder ein entsprechendes Redispersionspulver, insbesondere auf Basis vorzugsweise wäßrig redispergierbarer Emulsionspolymere,
- Polystytolpartikel,
- keramische Mikrohohlkugeln,
- synthetische Mikrohohlkugeln und
- gegebenenfalls mindestens ein Bindemittel
enthält

2. Baustoffzusammensetzung nach Anspruch 1, **dadurch gekennzeichnet, daß** eine Polymerdispersion oder ein entsprechendes Redispersionspulver auf Basis von vinyl-, (meth-)acryl-, styrol-, butadien- und/oder ethylenbasierten Polymeren eingesetzt ist, insbesondere wobei die eingesetzte Polymerdispersion oder das entsprechende Redispersionspulver auf Vinyl- oder Acrylat-Basis, wie Vinylacetat, Vinylpropionat, Vinyllaurat, Vinylversatat, Vinylchlorid, Vinylidenchlorid und/oder geradkettigen oder verzweigten Vinylestern mit 1 bis 20 C-Atomen, Acryl- und Methacryl-Monomeren, insbesondere deren Estern, Styrol, Butadien und/oder Ethylen aufgebaut ist.

3. Baustoffzusammensetzung nach Anspruch 1 oder 2, **dadurch gekennzeichnet,**
• **daß** die Polymerdispersion eine Kunststoffdispersion, insbesondere eine nichtepoxidharzbasierte Kunststoffdispersion, ist und/oder
• **daß** die Polymerdispersion ionisch modifiziert ist und/oder
• **daß** die Polymerdispersion einen Feststoffgehalt von 30 bis 75 %, insbesondere 40 bis 65 %, bevorzugt 50 bis 60 %, bezogen auf die Polymerdispersion, aufweist und/oder
• **daß** die Polymerpartikel der Polymerdispersion Teilchengrößen, insbesondere mittlere Teilchengrößen, von 0,001 bis 5 µm, insbesondere 0,01 bis 3 µm, vorzugsweise 0,05 bis 2 µm, besonders bevorzugt 0,1 bis 1,0 µm, aufweisen und/oder
• **daß** die Polymerdispersion als ein wäßrig basiertes, vorzugsweise ammoniakfreies Dispersionssystem formuliert ist und/oder
• **daß** die Polymerdispersion eine Dispersion auf Basis von Styrol/ (Meth-)-Acrylat-Copolymeren, Styrol/Butadien-Copolymeren und/ oder Vinylacetat/Ethylen-Copolymeren, bevorzugt auf Basis von Styrol/Acrylat-Copolymeren, ist und/oder daß das Redispersionspulver ein Redispersionspulver auf Basis von Styrol/(Meth-)Acrylat-Copolymeren, Styro/Butadien-Copolymeren und/oder Vinylacetat/Ethylen-Copolymeren, bevorzugt auf Basis von Styrol/Acrylat-Copolymeren, ist.

4. Baustoffzusammensetzung nach einem der Ansprüche 1 bis 3, **dadurch gekennzeichnet,**
• **daß** die Polystyrolpartikel als Polystyrolperlen oder Polystyrolkügelchen oder als Polystyrolgranulat vorliegen und/oder
• **daß** die Polystyrolpartikel Teilchengrößen von 0,1 bis 3,0 mm, insbesondere 0,2 bis 2,0 mm, vorzugsweise 0,5 bis 1,5 mm, aufweisen und/oder
• **daß** die Polystyrolpartikel Schüttdichten von 5 bis 30 g/l, insbesondere 7,5 bis 15 g/l, vorzugsweise 10 bis 13 g/l, aufweisen und/oder
• **daß** die Polystyrolpartikel aus expandierbarem und/oder expandiertem Polystyrol gebildet sind, insbesondere wobei das expandierbare Polystyrol mindestens ein Treibmittel, vorzugsweise ein Alkan, insbesondere Pentan und/oder Pentanisomere, enthält.

5. Baustoffzusammensetzung nach einem der Ansprüche 1 bis 4, **dadurch gekennzeichnet,**
• **daß** die keramischen Mikrohohlkugeln auf Basis von Silikaten, insbesondere Aluminium- und/oder Borosilikaten, bevorzugt Aluminiumsilikaten, gebildet sind und/oder
• **daß** die keramischen Mikrohohlkugeln Teilchengrößen von 1 bis 500 µm, insbesondere 1 bis 350 µm, vorzugsweise 10 bis 300 µm, aufweisen und/oder
• **daß** die keramischen Mikrohohlkugeln mittlere Teilchengrößen von 100 bis 160 µm, insbesondere 120 bis 150 µm, vorzugsweise 125 bis 140 µm, aufweisen und/oder
• **daß** die keramischen Mikrohohlkugeln Schüttgewichte von 100 bis 600 g/l, insbesondere 250 bis 500 g/l, vorzugsweise 350 bis 475 g/l, und/oder Schüttvolumina von 1.800 bis 3.000 ml/1.000g, insbesondere 2.000 bis 2.900 ml/1.000 g, vorzugsweise 2.100 bis 2.800 ml/1.000 g, aufweisen und/oder
• **daß** die keramischen Mikrohohlkugeln, Dichten im Bereich von 0,5 bis 1,0 g/cm³, insbesondere 0,6 bis 0,9 g/cm³, vorzugsweise 0,7 bis 0,8 g/cm³, aufweisen und/oder
• **daß** die keramischen Mikrohohlkugeln Härten nach Mohs von mindestens 4, insbesondere mindestens 4,5, bevorzugt mindestens 5, besonders bevorzugt im Bereich von 5 bis 6, und/oder Druckfestigkeiten von mindestens 12 MPa, insbesondere mindestens 13 MPa, vorzugsweise mindestens 14 MPa, aufweisen und/oder
• **daß** die keramischen Mikrohohlkugeln einen Hüllendurchmesser aufweisen, welcher 5 bis 15 %, vorzugsweise etwa 10 %, der gesamten Mikrohohlkugeln ausmacht, während 85 % bis 95 %, vorzugsweise etwa 90 %, der keramischen Mikrohohlkugeln vom durch die Hülle ausgebildeten Hohlraum gebildet sind.

6. Baustoffzusammensetzung nach einem der Ansprüche 1 bis 5, **dadurch gekennzeichnet,**
• **daß** die synthetischen Mikrohohlkugeln auf Basis von organischen Polymeren ausgebildet sind, insbesondere aus organischen Polymeren auf Basis von Monomeren aus der Gruppe von Vinylidenchlorid, Acrylnitril und/oder Methyl(meth-)acrylaten, vorzugsweise aus Vinylidenchlorid/Acrylnitril-Copolymeren, oder aus Phenolharzen, und/oder
• **daß** die synthetischen Mikrohohlkugeln Teilchengrößen von 1 bis 300 µm, insbesondere 1 bis 200 µm, vorzugsweise 5 bis 150 µm, besonders bevorzugt 10 bis 150 µm, aufweisen und/oder
• **daß** die synthetischen Mikrohohlkugeln mittlere Teilchengrößen von 10 bis 100 µm, insbesondere 20 bis 80 µm, vorzugsweise 20 bis 60 µm, aufweisen und/oder
• **daß** die synthetischen Mikrohohlkugeln einen Feststoffgehalt von 5 bis 20 %, insbesondere 7 bis 17 %, bezogen auf die Mikrohohlkugeln, aufweisen und/oder
• **daß** die synthetischen Mikrohohlkugeln in expandierbarer und/oder expandierter Form vorliegen, insbesondere wobei die synthetischen Mikrohohlkugeln mindestens ein Treibmittel, vorzugsweise ein Alkan, insbesondere Pentan und/oder Pentanisomere, enthalten.

7. Baustoffzusammensetzung nach einem der Ansprüche 1 bis 6, **dadurch gekennzeichnet,**
• **daß** das Bindemittel ein hydraulisches, latenthydraulisches oder nichthydraulisches Bindemittel, insbesondere ein hydraulisches Bindemittel, ist und/oder
• **daß** das Bindemittel aus der Gruppe von Zementen; Kalk; Weißkalk;
Calciumsulfaten, wie Anhydrit und Gips; Schlacken, wie Hochofenschlacken; Filteraschen; und deren Mischungen ausgewählt ist und vorzugsweise ein Zement, insbesondere ein Portlandzement, ist.

8. Baustoffzusammensetzung nach einem der Ansprüche 1 bis 7, **dadurch gekennzeichnet, daß** die Baustoffzusammensetzung außerdem mindestens ein Additiv und/oder mindestens einen weiteren Inhaltsstoff enthält, insbesondere ausgewählt aus der Gruppe von Netzmitteln, Entschäumern, Konservierungsmitteln, Verdickungsmitteln, Verflüssigern, anorganischen Füllstoffen, mineralischen Zuschlagstoffen, Erstarrungsverzögerern, Erstarrungsbeschleunigern, Fasern, Pigmenten und deren Mischungen.

9. Baustoffzusarmmensetzung nach einem der Ansprüche 1 bis 8, **dadurch gekennzeichnet, daß** die Baustoffzusammensetzung mindestens ein Verdickungsmittel aufweist, insbesondere aus der Gruppe von Methylhydroxyethylcellulose, Xanthangummi und Kieselsäure sowie deren Mischungen, insbesondere eine Kombination von Xanthangummi und/ oder Kieselsäure mit Methylhydroxyethylcellulose, aufweist.

10. Baustoffzusammensetzung nach einem der Ansprüche 1 bis 9, **dadurch gekennzeichnet, daß** die Baustoffzusammensetzung als Einkomponenten-System (1K-System) oder als Zweikomponenten-System (2K-System) formuliert ist, insbesondere wobei im Fall des Zwcikomponenten-Systems Polymerdispersion einerseits und Bindemittel andererseits in unterschiedlichen Kornponenten vorliegen.

11. Baustoffzusammensetzung, insbesondere bitumenfreie Abdichtungsmasse, nach einem der Ansprüche 1 bis 10, wobei die Baustoffzusammensetzung als Zweikomponenten-System (2K-System) formuliert ist, wobei das Zweikomponenten-System einerseits eine Komponente (A), insbesondere als Flüssigkomponente, und andererseits eine Komponente (B), insbesondere als Trocken- bzw. Pulverkomponente oder als Flüssigkomponente, vorzugsweise als Trocken- bzw. Pulverkomponente, umfaßt,
• wobei die Komponente (A), jeweils mengenbezogen auf die Komponente (A),
- mindestens eine Polymerdispersion, insbesondere in Mengen von 2 bis 100 Gew.-Teilen, vorzugsweise 30 bis 80 Gew.-Teilen, besonders bevorzugt 40 bis 60 Gew.-Teilen,
- Polystyrolpartikel, insbesondere in Mengen von 0,01 bis 10 Gew.-Teilen, vorzugsweise 0,05 bis 5 Gew.-Teilen, besonders bevorzugt 0,1 bis 2,5 Gew.-Teilen,
- keramische Mikrohohlkugeln, insbesondere in Mengen von 0,1 bis 60 Gew.-Teilen, vorzugsweise 0,2 bis 50 Gew.-Teilen, besonders bevorzugt 0,5 bis 10 Gew.-Teilen,
- synthetische Mikrohohlkugeln, insbesondere in Mengen von 0,01 bis 30 Gew.-Teilen, vorzugsweise 0,05 bis 15 Gew.-Teilen, besonders bevorzugt 0,1 bis 5 Gew.-Teilen,
- gegebenenfalls mindestens einen anorganischen Füllstoff oder mineralischen Zuschlag, vorzugsweise Calciumcarbonat und/ oder SiO₂, SiO₂ bevorzugt in Form von Quarzsand, insbesondere in Mengen von insgesamt 2 bis 160 Gew.-Teilen, vorzugsweise 5 bis 100 Gew.-Teilen, besonders bevorzugt 10 bis 50 Gew.-Teilen,
- gegebenenfalls mindestens ein weiteres Additiv, insbesondere aus der Gruppe von Netzmitteln, Entschäumern, Konservierungsmitteln und/oder Verdickungsmitteln, insbesondere in Mengen von insgesamt 0,01 bis 5 Gew.-Teilen, vorzugsweise 1 bis 5 Gew.-Teilen, und
- gegebenenfalls zusätzliches Wasser, insbesondere in Mengen von 0,1 bis 10 Gew.-Teilen, vorzugsweise 1 bis 5 Gew.-Teilen,
enthält und
• wobei die Komponente (B), jeweils mengenbezogen auf die Komponente (B),
- mindestens ein Bindemittel, vorzugsweise Zement, insbesondere in Mengen von 1 bis 100 Gew.-Teilen, vorzugsweise 5 bis 50 Gew.-Teilen, besonders bevorzugt 5 bis 15 Gew.-Teilen,
- gegebenenfalls mindestens einen anorganischen Füllstoff oder mineralischen Zuschlag, vorzugsweise Calciumcarbonat, bevorzugt in Form von Kalksteinmehl, und/oder SiO₂, SiO₂ bevorzugt in Form von Quarzsand, insbesondere in Mengen von insgesamt 2 bis 200 Gew.-Teilen, vorzugsweise 50 bis 150 Gew.-Teilen, besonders bevorzugt 80 bis 100 Gew.-Teilen,
enthält.

12. Baustoffzusammensetzung nach Anspruch 11, **dadurch gekennzeichnet, daß** die Komponente (B) als Flüssigkomponente formuliert ist und mindestens ein Dispergiermittel, insbesondere ein gegenüber dem Bindemittel inertes Dispergiermittel, enthält, vorzugsweise in Mengen von 1 bis 1.000 Gew.-Teilen, insbesondere 50 bis 500 Gew.-Teilen, besonders bevorzugt 100 bis 200 Gew.-Teilen, insbesondere wobei das Dispergiermittel ausgewählt ist aus unter Atmosphärendruck flüssigen organischen Verbindungen mit einem Siedepunkt oder Siedebereich bei Atmosphärendruck von mindestens 200 °C, vorzugsweise aus der Gruppe von organischen Lösemitteln, wie organischen Kohlenwasserstoffen, Ölen, insbesondere Mineral- und Paraffinölen, Weichmachern und deren Mischungen.

13. Baustoffzusammensetzung nach Anspruch 11 oder 12, **dadurch gekennzeichnet, daß** die Komponente (A) und die Komponente (B) in einem Mischungsverhältnis von (A) : (B) von 30 : 1 bis 1 : 1, insbesondere von 10 ; 1 bis 1 ; 1, vorzugsweise von 4 : 1 bis 1 : 1, bevorzugt von 3 : 1 bis 1 : 1, ganz besonders bevorzugt von etwa 2 : 1, eingesetzt werden.

14. Baustoffzusammensetzung nach einem der Ansprüche 11 bis 13, **dadurch gekennzeichnet, daß** die Komponente (A) eine Dichte von 0,5 bis 1,0 kg/l, insbesondere 0,6 bis 0,8 kg/l, vorzugsweise 0,70 bis 0,80 kg/l, aufweist und/oder die Komponente (B) eine Dichte von 0,8 bis 2,5 kg/l, insbesondere 1,5 bis 2,1 kg/l, vorzugsweise 1,60 bis 1,70 kg/l, aufweist und/oder daß die Dichte der Komponente (B) mindestens das 1,5fache, insbesondere mindestens das 1,7fache, vorzugsweise mindestens das 2fache, der Dichte der Komponente (A) beträgt.

15. Verwendung einer Baustoffzusammensetzung nach einem der Ansprüche 1 bis 14 zur Bauwerksabdichtung, insbesondere zum Abdichten und/oder zum Schutz von erdberührten Bauwerken oder Bauteilen oder von Dächern.

16. Verfahren zum Abdichten und/oder zum Schutz von Bauwerken oder Bauteilen, **dadurch gekennzeichnet, daß** eine Baustoffzusammensetzung nach einem der Ansprüche 1 bis 14 auf die betreffenden Bauwerke oder Bauteile in ausreichender Dicke appliziert und nachfolgend abtrocknen und aushärten gelassen wird.

17. Verwendung nach Anspruch 15 oder Verfahren nach Anspruch 16, **dadurch gekennzeichnet, daß** die Baustoffmischung mit einer Schichtdicke im nassen Zustand von 0,1 bis 10 mm, insbesondere 1 bis 5 mm, vorzugsweise 2 bis 4,5 mm, appliziert wird.

## Claims

1. A building material composition, in particular a bitumen-free sealing compound, wherein the building material composition contains
- at least one polymer dispersion or a corresponding redispersion powder, in particular based on preferably aqueous resdispersible emulsion polymers,
- polystyrene particles,
- ceramic hollow microspheres,
- synthetic hollow microspheres and
- optionally at least one binder.

2. A building material composition according to claim 1, **characterised in that** a polymer dispersion or a corresponding redispersion powder based on vinyl-, (meth)acrylic-, styrene-, butadiene- and/or ethylene-based polymers is used, in particular wherein the polymer dispersion or the corresponding redispersion powder used is synthesised on a vinyl or acrylate basis, such as vinyl acetate, vinyl propionate, vinyl laurate, vinyl versatate, vinyl chloride, vinylidene chloride and/or straight-chain or branched vinyl esters with 1 to 20 C atoms, acrylic and methacrylic monomers, in particular the esters thereof, styrene, butadiene and/or ethylene.

3. A building material composition according to claim 1 or claim 2, **characterised in**
• **that** the polymer dispersion is a plastics dispersion, in particular a plastics dispersion not based on epoxy resin, and/or
• **that** the polymer dispersion is ionically modified and/or
• **that** the polymer dispersion has a solids content of 30 to 75%, in particular 40 to 65%, preferably 50 to 60%, relative to the polymer dispersion, and/or
• **that** the polymer particles of the polymer dispersion have particle sizes, in particular average particle sizes, of 0.001 to 5 µm, in particular 0.01 to 3 µm, preferably 0.05 to 2 µm, particularly preferably 0.1 to 1.0 µm and/or
• **that** the polymer dispersion is formulated as a water-based, preferably ammonia-free dispersion system and/or
• **that** the polymer dispersion is a dispersion based on styrene/(meth)acrylate copolymers, styrene/butadiene copolymers and/or vinyl acetate/ethylene copolymers, preferably based on styrene/acrylate copolymers, and/or that the redispersion powder is a redispersion powder based on styrene/(meth)acrylate copolymers, styrene/butadiene copolymers and/or vinyl acetate/ethylene copolymers, preferably based on styrene/acrylate copolymers.

4. A building material composition according to any one of claims 1 to 3, **characterised in**
• **that** the polystyrene particles assume the form of polystyrene beads or small polystyrene spheres or polystyrene granules and/or
• **that** the polystyrene particles have particle sizes of 0.1 to 3.0 mm, in particular 0.2 to 2.0 mm, preferably 0.5 to 1.5 mm, and/or
• **that** the polystyrene particles have a bulk density of 5 to 30 g/l, in particular 7.5 to 15 g/I, preferably 10 to 13 g/l, and/or
• **that** the polystyrene particles are formed from expandable and/or expanded polystyrene, in particular wherein the expandable polystyrene contains at least one blowing agent, preferably an alkane, in particular pentane and/or pentane isomers.

5. A building material composition according to any one of claims 1 to 4, **characterised in**
• **that** the ceramic hollow microspheres are formed on the basis of silicates, in particular aluminium silicates and/or borosilicates, preferably aluminium silicates, and/or
• **that** the ceramic hollow microspheres have particle sizes of 1 to 500 µm, in particular 1 to 350 µm, preferably 10 to 300 µm and/or
• **that** the ceramic hollow microspheres have average particle sizes of 100 to 160 µm, in particular 120 to 150 µm, preferably 125 to 140 µm and/or
• **that** the ceramic hollow microspheres have bulk densities of 100 to 600 g/l, in particular 250 to 500 g/I, preferably 350 to 475 g/I, and/or bulk volumes of 1,800 to 3,000 ml/1,000 g, in particular 2,000 to 2,900 ml/1,000 g, preferably 2,100 to 2,800 ml/1,000 g and/or
• **that** the ceramic hollow microspheres have densities in the range from 0.5 to 1.0 g/cm³, in particular 0.6 to 0.9 g/cm³, preferably 0.7 to 0.8 g/cm³ and/or
• **that** the ceramic hollow microspheres have Mohs hardness values of at least 4, in particular at least 4.5, preferably at least 5, particularly preferably in the range from 5 to 6, and/or compressive strengths of at least 12 MPa, in particular at least 13 MPa, preferably at least 14 MPa and/or
• **that** the ceramic hollow microspheres have a shell diameter which makes up 5 to 15%, preferably approx. 10%, of the entire hollow microspheres, while 85% to 95%, preferably approx. 90%, of the ceramic hollow microspheres are formed by the cavity formed by the envelope.

6. A building material composition according to any one of claims 1 to 5, **characterised in**
• **that** the synthetic hollow microspheres are formed on the basis of organic polymers, in particular from organic polymers based on monomers from the group of vinylidene chloride, acrylonitrile and/or methyl (meth)acrylates, preferably from vinylidene chloride/acrylonitrile copolymers, or from phenolic resins, and/or
• **that** the synthetic hollow microspheres have particle sizes of 1 to 300 µm, in particular 1 to 200 µm, preferably 5 to 150 µm, particularly preferably 10 to 150 µm and/or
• **that** the synthetic hollow microspheres have average particle sizes of 10 to 100 µm, in particular 20 to 80 µm, preferably 20 to 60 µm and/or
• **that** the synthetic hollow microspheres have a solids content of 5 to 20%, in particular 7 to 17%, relative to the hollow microspheres, and/or
• **that** the synthetic hollow microspheres assume expandable and/or expanded form, in particular wherein the synthetic hollow microspheres contain at least one blowing agent, preferably an alkane, in particular pentane and/or pentane isomers.

7. A building material composition according to any one of claims 1 to 6, **characterised in**
• **that** the binder is a hydraulic, latently hydraulic or non-hydraulic binder, in particular a hydraulic binder and/or
• **that** the binder is selected from the group of cements; lime; white lime; calcium sulfates, such as anhydrite and gypsum; slags, such as blast furnace slags; filter ashes; and mixtures thereof and is preferably a cement, in particular a Portland cement.

8. A building material composition according to any one of claims 1 to 7, **characterised in that** the building material composition moreover contains at least one additive and/or at least one further ingredient, in particular selected from the group of wetting agents, defoamers, preservatives, thickeners, liquefying agents, inorganic fillers, mineral aggregates, setting retarders, setting accelerators, fibres, pigments and mixtures thereof.

9. A building material composition according to any one of claims 1 to 8, **characterised in that** the building material composition comprises at least one thickener, in particular from the group of methylhydroxyethyl-cellulose, xanthan gum and silica and mixtures thereof, in particular a combination of xanthan gum and/or silica with methylhydroxyethyl-cellulose.

10. A building material composition according to any one of claims 1 to 9, **characterised in that** the building material composition is formulated as a single-component system (1C system) or as a two-component system (2C system), in particular wherein in the case of the two-component system the polymer dispersion on the one hand and the binder on the other hand are present in different components.

11. A building material composition, in particular a bitumen-free sealing compound, according to any one of claims 1 to 10, wherein the building material composition is formulated as a two-component system (2C system), wherein the two-component system comprises on the one hand a component (A), in particular as a liquid component, and on the other hand a component (B), in particular as a dry or powder component or as a liquid component, preferably as a dry or powder component,
• wherein component (A) contains, in each case relative to the quantity of component (A),
- at least one polymer dispersion, in particular in quantities of 2 to 100 parts by weight, preferably 30 to 80 parts by weight, particularly preferably 40 to 60 parts by weight,
- polystyrene particles, in particular in quantities of 0.01 to 10 parts by weight, preferably 0.05 to 5 parts by weight, particularly preferably 0.1 to 2.5 parts by weight,
- ceramic hollow microspheres, in particular in quantities of 0.1 to 60 parts by weight, preferably 0.2 to 50 parts by weight, particularly preferably 0.5 to 10 parts by weight,
- synthetic hollow microspheres, in particular in quantities of 0.01 to 30 parts by weight, preferably 0.05 to 15 parts by weight, particularly preferably 0.1 to 5 parts by weight,
- optionally at least one inorganic filler or mineral aggregate, preferably calcium carbonate and/or SiO₂, SiO₂ preferably in the form of silica sand, in particular in overall quantities of 2 to 160 parts by weight, preferably 5 to 100 parts by weight, particularly preferably 10 to 50 parts by weight,
- optionally at least one further additive, in particular from the group of wetting agents, defoamers, preservatives and/or thickeners, in particular in overall quantities of 0.01 to 5 parts by weight, preferably 1 to 5 parts by weight, and
- optionally additional water, in particular in quantities of 0.1
to 10 parts by weight, preferably 1 to 5 parts by weight,
and
• wherein component (B) contains, in each case relative to the quantity of component (B),
- at least one binder, preferably cement, in particular in quantities of 1 to 100 parts by weight, preferably 5 to 50 parts by weight, particularly preferably 5 to 15 parts by weight,
- optionally at least one inorganic filler or mineral aggregate, preferably calcium carbonate, preferably in the form of limestone powder, and/or SiO₂, SiO₂ preferably in the form of silica sand, in particular in overall quantities of 2 to 200 parts by weight, preferably 50 to 150 parts by weight, particularly preferably 80 to 100 parts by weight.

12. A building material composition according to claim 11, **characterised in that** component (B) is formulated as a liquid component and contains at least one dispersant, in particular a dispersant which is inert towards the binder, preferably in quantities of 1 to 1,000 parts by weight, in particular 50 to 500 parts by weight, particularly preferably 100 to 200 parts by weight, in particular wherein the dispersant is selected from organic compounds which are liquid at atmospheric pressure with a boiling point or boiling range at atmospheric pressure of at least 200°C, preferably from the group of organic solvents, such as organic hydrocarbons, oils, in particular mineral and paraffin oils, plasticisers and mixtures thereof.

13. A building material composition according to claim 11 or claim 12, **characterised in that** component (A) and component (B) are used in a mixing ratio of (A):(B) of 30:1 to 1:1, in particular of 10:1 to 1:1, preferably of 4:1 to 1:1, more preferably of 3:1 to 1:1, very particularly preferably of approx 2:1.

14. A building material composition according to any one of claims 11 to 13, **characterised in that** component (A) has a density of 0.5 to 1.0 kg/l, in particular 0.6 to 0.8 kg/l, preferably 0.70 to 0.80 kg/l and/or component (B) has a density of 0.8 to 2.5 kg/l, in particular 1.5 to 2.1 kg/l, preferably 1.60 to 1.70 kg/l and/or that the density of component (B) amounts to at least 1.5 times, in particular at least 1.7 times, preferably at least twice, the density of component (A).

15. Use of a building material composition according to any one of claims 1 to 14 for sealing built structures, in particular for sealing and/or protecting roofs or built structures or components in contact with the ground.

16. A method for sealing and/or protecting built structures or components, **characterised in that** a building material composition according to any one of claims 1 to 14 is applied to a sufficient thickness onto the built structures or components in question and then allowed to dry and cure.

17. Use according to claim 15 or a method according to claim 16, **characterised in that** the building material mixture is applied in a layer thickness in the wet state of 0.1 to 10 mm, in particular 1 to 5 mm, preferably 2 to 4.5 mm.

## Revendications

1. Composition de matériau de construction, en particulier matière d'étanchéisation exempte de bitume, la composition de matériau de construction contenant :
- au moins une dispersion polymère ou une poudre de redispersion correspondante, en particulier à base de polymères d'émulsion qui peuvent être remis en dispersion de préférence dans des conditions aqueuses ;
- des particules de polystyrène ;
- des microbilles creuses en céramique ;
- des microbilles creuses synthétiques ; et
- si nécessaire, au moins un liant.

2. Composition de matériau de construction selon la revendication 1, **caractérisée en ce qu'**on met en oeuvre une dispersion polymère ou une poudre de redispersion correspondante à base de polymères basés sur un composé vinylique, un composé (méth)acrylique, le styrène, le butadiène et/ou l'éthylène, en particulier dans laquelle la dispersion polymère mise en oeuvre ou la poudre de redispersion correspondante est à base d'un composé vinylique ou d'un composé d'acrylate tel que l'acétate de vinyle, le propionate de vinyle, le laurate de vinyle, le versatate de vinyle, le chlorure de vinyle, le chlorure de vinylidène et/ou des esters vinyliques à chaîne droite ou ramifiée contenant de 1 à 20 atomes de carbone, de monomères acryliques et méthacryliques en particulier leurs esters, de styrène, de butadiène et/ou d'éthylène.

3. Composition de matériau de construction selon la revendication 1 ou 2, **caractérisée**
- **en ce que** la dispersion polymère est une dispersion de matière synthétique, en particulier une dispersion de matière synthétique à base d'une résine non époxydée ; et/ou
- **en ce que** la dispersion polymère a subi une modification ionique ;
et/ou
- **en ce que** la dispersion polymère présente une teneur en substances solides de 30 à 75 %, en particulier de 40 à 65 %, de préférence de 50 à 60 %, rapportés à la dispersion polymère ; et/ou
- **en ce que** les particules polymères de la dispersion polymère présentent des granulométries, en particulier des granulométries moyennes de 0,001 à 5 µm, en particulier de 0,01 à 3 µm, de préférence de 0,05 à 2 µm, de manière particulièrement préférée de 0,1 à 1,0 µm ; et/ou
- **en ce que** la dispersion polymère est formulée sous la forme d'un système de dispersion à base aqueuse, de préférence exempt d'ammoniac ; et/ou
- **en ce que** la dispersion polymère est une dispersion à base de copolymères de styrène/(méth)acrylate, de copolymères de styrène/butadiène et/ou de copolymères d'acétate de vinyle/éthylène, de préférence à base de copolymères de styrène/acrylate, et/ou en ce que la poudre de redispersion est une poudre de redispersion à base de copolymères de styrène/(méth)acrylate, de copolymères de styrène/butadiène et/ou de copolymères d'acétate de vinyle/éthylène, de préférence à base de copolymères de styrène/acrylate,

4. Composition de matériau de construction selon l'une quelconque des revendications 1 à 3, **caractérisée**
- **en ce que** les particules de polystyrène sont présentes sous la forme de perles de polystyrène ou sous la forme de petites billes de polystyrène ou sous la forme d'un produit de granulation de polystyrène ; et/ou
- **en ce que** les particules de polystyrène présentent des granulométries de 0,1 à 3,0 mm, en particulier de 0,2 à 2,0 mm, de préférence de 0,5 à 1,5 mm ; et/ou
- **en ce que** les particules de polystyrène présentent des masses volumiques apparentes de 5 à 30 g/l, en particulier de 7,5 à 15 g/l, de préférence de 10 à 13 g/l ; et/ou
- **en ce que** les particules de polystyrène sont formées à partir de polystyrène expansible et/ou expansé, le polystyrène expansible contenant en particulier au moins un agent d'expansion, de préférence un alcane, en particulier du pentane et/ou des isomères du pentane.

5. Composition de matériau de construction selon l'une quelconque des revendications 1 à 4, **caractérisée**
- **en ce que** les microbilles creuses en céramique sont formées à partir de silicates, en particulier à partir de silicates d'aluminium et/ou de borosilicates, de préférence à partir de silicates d'aluminium ; et/ou
- **en ce que** les microbilles creuses en céramique présentent des granulométries de 1 à 500 µm, en particulier de 1 à 350 µm, de préférence de 10 à 300 µm ; et/ou
- **en ce que** les microbilles creuses en céramique présentent des granulométries moyennes de 100 à 160 µm, en particulier de 120 à 150 µm, de préférence de 125 à 140 µm ; et/ou
- **en ce que** les microbilles creuses en céramique présentent des poids apparents de 100 à 600 g/l, en particulier de 250 à 500 g/l, de préférence de 350 à 475 g/l et/ou des volumes apparents de 1800 à 3000 ml/1000 g, en particulier de 2000 à 2900 ml/1000 g, de préférence de 2100 à 2800 ml/1000 g ; et/ou
- **en ce que** les microbilles creuses en céramique présentent des densités dans la plage de 0,5 à 1,0 g/cm³, en particulier de 0,6 à 0,9 g/cm³, de préférence de 0,7 à 0,8 g/cm³ ; et/ou
- **en ce que** les microbilles creuses en céramique présentent des duretés selon Mohs d'au moins 4, en particulier d'au moins 4,5, de préférence d'au moins 5, de manière particulièrement préférée dans la plage de 5 à 6, et/ou des résistances à la pression d'au moins 12 MPa, en particulier d'au moins 13 MPa, de préférence d'au moins 14 MPa ; et/ou
- **en ce que** les microbilles creuses en céramique présentent un diamètre d'enveloppe qui représente de 5 à 15 %, de préférence environ 10 % des microbilles creuses totales, tandis que 85 % à 95 %, de préférence environ 90 % des microbilles creuses en céramique représentent l'espace creux formé par l'enveloppe.

6. Composition de matériau de construction selon l'une quelconque des revendications 1 à 5, **caractérisée**
- **en ce que** les microbilles creuses synthétiques sont réalisées à partir de polymères organiques, en particulier à partir de polymères organiques à base de monomères choisis parmi le groupe comprenant le chlorure de vinylidène, l'acrylonitrile et/ou des (méth)acrylates de méthyle, de préférence à partir de copolymères de chlorure de vinylidène/acrylonitrile ou à partir de résines phénoliques ; et/ou
- **en ce que** les microbilles creuses synthétiques présentent des granulométries de 1 à 300 µm, en particulier de 1 à 200 µm, de préférence de 5 à 150 µm, de manière particulièrement préférée de10 à 150 µm ; et/ou
- **en ce que** les microbilles creuses synthétiques présentent des granulométries moyennes de 10 à 100 µm, en particulier de 20 à 80 µm, de préférence de 20 à 60 µm ; et/ou
- **en ce que** les microbilles creuses synthétiques présentent une teneur en substances solides de 5 à 20 %, en particulier de 7 à 17 %, rapportés aux microbilles creuses ; et/ou
- **en ce que** les microbilles creuses synthétiques se présentent sous une forme expansible et/ou expansée, les microbilles creuses synthétiques contenant en particulier au moins un agent d'expansion, de préférence un alcane, en particulier du pentane et/ou des isomères du pentane.

7. Composition de matériau de construction selon l'une quelconque des revendications 1 à 6, **caractérisée**
- **en ce que** le liant représente un liant hydraulique, hydraulique latent ou non hydraulique, en particulier un liant hydraulique ; et/ou
- **en ce que** le liant est choisi parmi le groupe comprenant des ciments ; de la chaux ; de la chaux blanche ; des sulfates de calcium tels que l'anhydrite et le gypse ; des scories, telles que des scories de hauts-fourneaux ; des cendres de filtres ; ainsi que leurs mélanges, et représente de préférence un ciment, en particulier un ciment Portland.

8. Composition de matériau de construction selon l'une quelconque des revendications 1 à 7, **caractérisée en ce que** la composition de matériau de construction contient en outre au moins un additif et/ou au moins un élément constitutif supplémentaire, en particulier choisi parmi le groupe comprenant des agents mouillants, des agents antimousse, des conservateurs, des épaississants, des liquéfiants, des matières de charge inorganiques, des substances d'addition minérales, des ralentisseurs du durcissement, des accélérateurs du durcissement, des fibres, des pigments, ainsi que leurs mélanges.

9. Composition de matériau de construction selon l'une quelconque des revendications 1 à 8, **caractérisée en ce que** la composition de matériau de construction présente au moins un épaississant, en particulier choisi parmi le groupe comprenant de la méthylhydroxyéthylcellulose, la gomme de xanthane et l'acide silicique, ainsi que leurs mélanges, en particulier une combinaison de gomme de xanthane et/ou d'acide silicique avec de la méthylhydroxyéthylcellulose.

10. Composition de matériau de construction selon l'une quelconque des revendications 1 à 9, **caractérisée en ce que** la composition de matériau de construction est formulée sous la forme d'un système à un seul composant (système 1C) ou sous la forme d'un système à deux composants (système 2C), en particulier dans laquelle, dans le cas du système à deux composants, la dispersion polymère d'une part et le liant d'autre part sont présents dans des composants différents.

11. Composition de matériau de construction, en particulier matière d'étanchéisation exempte de bitume, selon l'une quelconque des revendications 1 à 10, **caractérisée en ce que** la composition de matériau de construction est formulée sous la forme d'un système à deux composants (système 2C), le système à deux composants comprenant d'une part un composant (A) en particulier sous la forme d'un composant liquide et d'autre part un composant (B) en particulier sous la forme d'un composant sec, respectivement pulvérulent ou sous la forme d'un composant liquide, de préférence sous la forme d'un composant sec, respectivement pulvérulent,
- le composant (A) contenant, chaque fois rapportées à la quantité du composant (A) :
- au moins une dispersion polymère, en particulier dans des quantités de 2 à 100 parties en poids, de préférence de 30 à 80 parties en poids, de manière particulièrement préférée de 40 à 60 parties en poids ;
- des particules de polystyrène, en particulier dans des quantités de 0,01 à 10 parties en poids, de préférence de 0,05 à 5 parties en poids, de manière particulièrement préférée de 0,1 à 2,5 parties en poids ;
- des microbilles creuses en céramique, en particulier dans des quantités de 0,1 à 60 parties en poids, de préférence de 0,2 à 50 parties en poids, de manière particulièrement préférée de 0,5 à 10 parties en poids ;
- des microbilles creuses synthétiques, en particulier dans des quantités de 0,01 à 30 parties en poids, de préférence de 0,05 à 15 parties en poids, de manière particulièrement préférée de 0,1 à 5 parties en poids ;
- si nécessaire, au moins une matière de charge inorganique ou un additif minéral, de préférence du carbonate de calcium et/ou du SiO₂, du SiO₂ de préférence sous la forme de sable de quartz, en particulier dans des quantités totales de 2 à 160 parties en poids, de préférence de 5 à 100 parties en poids, de manière particulièrement préférée de 10 à 50 parties en poids ;
- si nécessaire, au moins un additif supplémentaire, en particulier choisi parmi le groupe comprenant des agents mouillants, des agents antimousse, des conservateurs et/ou des épaississants, en particulier dans des quantités totales de 0,01 à 5 parties en poids, de préférence de 1 à 5 parties en poids ; et
- si nécessaire, de l'eau supplémentaire, en particulier dans des quantités de 0,1 à 10 parties en poids, de préférence de 1 à 5 parties en poids ; et
- le composant (B) contenant, chaque fois rapportées à la quantité du composant (B) :
- au moins un liant, de préférence du ciment, en particulier dans des quantités de 1 à 100 parties en poids, de préférence de 5 à 50 parties en poids, de manière particulièrement préférée de 5 à 15 parties en poids ;
- si nécessaire, au moins une matière de charge inorganique ou un additif minéral, de préférence du carbonate de calcium, de manière préférentielle sous la forme de poudre de calcaire et/ou du SiO₂, du SiO₂ de préférence sous la forme de sable de quartz, en particulier dans des quantités totales de 2 à 200 parties en poids, de préférence de 50 à 150 parties en poids, de manière particulièrement préférée de 80 à 100 parties en poids.

12. Composition de matériau de construction selon la revendication 11, **caractérisée en ce que** le composant (B) est formulé sous la forme d'un composant liquide et contient au moins un agent de mise en dispersion, en particulier un agent de mise en dispersion inerte vis-à-vis du liant, de préférence dans des quantités de 1 à 1.000 parties en poids, en particulier de 50 à 500 parties en poids, de manière particulièrement préférée de 100 à 200 parties en poids, l'agent de mise en dispersion étant choisi en particulier parmi des composés organiques liquides sous pression atmosphérique, possédant un point d'ébullition ou une plage d'ébullition sous pression atmosphérique d'au moins 200 °C, de préférence parmi le groupe comprenant des solvants organiques tels que des hydrocarbures organiques, des huiles, en particulier des huiles minérales et des huiles paraffiniques, des plastifiants, ainsi que leurs mélanges.

13. Composition de matériau de construction selon la revendication 11 ou 12, **caractérisée en ce que** le composant (A) et le composant (B) sont mis en oeuvre dans un rapport de mélange (A) : (B) de 30 : 1 à 1 : 1, en particulier de 10 : 1 à 1 : 1, de préférence de 4: 1 à 1 : 1, à titre préférentiel de 3 : 1 à 1 : 1, de manière tout particulièrement préférée d'environ 2 : 1.

14. Composition de matériau de construction selon l'une quelconque des revendications 11 à 13, **caractérisée en ce que** le composant (A) présente une densité de 0,5 à 1,0 kg/l, en particulier de 0,6 à 0,8 kg/l, de préférence de 0,70 à 0,80 kg/l, et/ou le composant (B) présente une densité de 0,8 à 2,5 kg/l, en particulier de 1,5 à 2,1 kg/l, de préférence de 1,60 à 1,70 kg/l, et/ou **en ce que** la densité du composant (B) représente au moins 1,5 fois, en particulier au moins 1,7 fois, de préférence au moins 2 fois la densité du composant (A).

15. Utilisation d'une composition de matériau de construction selon l'une quelconque des revendications 1 à 14, pour l'étanchéisation d'un bâtiment, en particulier pour l'étanchéisation et/ou pour la protection de bâtiments ou d'éléments de construction entrant en contact avec le sol ou de toits.

16. Procédé pour l'étanchéisation et/ou pour la protection de bâtiments ou d'éléments de construction, **caractérisé en ce qu'**on applique une composition de matériau de construction selon l'une quelconque des revendications 1 à 14 sur les bâtiments ou les éléments de construction concernés avec une épaisseur suffisante, et on laisse ensuite sécher et durcir.

17. Utilisation selon la revendication 15 ou procédé selon la revendication 16, **caractérisé en ce qu'**on applique le mélange de matériau de construction avec une épaisseur de couche à l'état humide de 0,1 à 10 mm, en particulier de 1 à 5 mm, de préférence de 2 à 4,5 mm.
